# EUROPÄISCHE PATENTSCHRIFT

(11) **EP 2 228 889 B1**
(45) Veröffentlichungstag und Bekanntmachung des Hinweises auf die Patenterteilung: **03.10.2018**
(21) Anmeldenummer: 10156279.1
(22) Anmeldetag: 12.03.2010
(51) Int. Cl.: H02K 3/28, H02K 15/04

(54) **Elektrische Maschine und Verfahren zur Herstellung einer elektrischen Maschine**
Electrical machine and method for manufacturing an electrical machine
Machine électrique et procédé de fabrication d'une machine électrique

(30) Priorität: 13.03.2009 DE 102009001543
(43) Veröffentlichungstag der Anmeldung: 15.09.2010
(73) Patentinhaber: SEG Automotive Germany GmbH, 70499 Stuttgart (DE)
(72) Erfinder: Wolf, Gert, 71563, Affalterbach (DE)
(74) Vertreter: Steinbauer, Florian

(56) Entgegenhaltungen:
- EP-A2- 1 296 439
- EP-A2- 1 365 495
- DE-A1-102006 052 111
- DE-A1-102007 005 742
- DE-U1-202007 013 136
- FR-A1- 2 888 059
- US-A1- 2007 296 289

## Beschreibung

### Stand der Technik

Die Erfindung geht aus von einer elektrischen Maschine nach der Gattung des unabhängigen Anspruchs, wie sie beispielsweise aus der DE 10 2006 052 111 A1 bekannt ist. Die dort offenbarte, vorzugsweise als elektrisch erregter Klauenpolgenerator für ein Kraftfahrzeug ausgebildete elektrische Maschine besitzt eine fünfsträngige Ständerwicklung, deren Stranganschlüsse nach Art eines Drudenfußes verschaltet und mit einer Gleichrichteranordnung verbunden sind. Der Ständer der Maschine weist somit fünf Nuten je Läuferpol auf, der Rotor besitzt zwölf bis sechzehn Pole. Die Ständerwicklung ist wahlweise als einfache oder verteilte Wellenwicklung ausgebildet, wobei alle zu verschaltenden Stranganschlüsse in benachbarten Nuten angeordnet sind. Hierbei sind jedoch relativ lange Wicklungsverbindungen auf dem Wickelkopf erforderlich, wenn die Wicklungsanschlüsse am Wickelkopf verteilt angeordnet werden, wodurch ein beachtlicher, von Hand auszuführender Arbeitsaufwand bei der Herstellung der Wicklung entsteht.

Des Weiteren ist aus der DE 10 2007 005 742 A1 ein Verfahren zur Herstellung einer elektrischen Maschine bekannt. In mindestens einem Wicklungsstrang werden zunächst wenigstens zwei, über wenigstens einen Drahtabschnitt verbundene Wicklungsteilstränge gewickelt, welche anschließend in Umfangsrichtung gegeneinander verdreht werden. Durch den, einen unregelmäßigen Wicklungsabschnitt bildenden Drahtabschnitt, sind die Wicklungsteilstränge miteinander verbunden.

### Offenbarung der Erfindung

Die erfindungsgemäße elektrische Maschine und das zugehörige Herstellungsverfahren haben demgegenüber den Vorteil, dass eine fünfsträngige Wicklung mit am Wickelkopf verteilten Stranganschlüssen mit kürzeren Verbindungsabschnitten ermöglicht werden, welche zudem weitestgehend automatisch auf den Wickelkopf fixierbar sind. Außerdem ist die Wicklung derart ausgeführt, dass jede Nut jedes Stranges die gleiche Anzahl von Spulenseiten aufweist, sodass eine über dem gesamten Statorumfang symmetrische Wicklung mit symmetrischer Verteilung der Magnetisierung realisiert werden kann. Dies wird vorteilhafterweise dadurch erreicht, dass wenigstens ein Wicklungsstrang mindestens zwei Wicklungsteilstränge aufweist, die durch mindestens einen unregelmäßigen Wicklungsabschnitt verbunden sind. Vorzugsweise ist hierbei wenigstens ein Wicklungsstrang in mehr als zwei Wicklungsteilstränge aufgeteilt, die durch wenigstens zwei unregelmäßige Wicklungsabschnitte verbunden sind.

Zusätzliche vorteilhafte Gestaltungen und Verbesserungen der erfindungsgemäßen Maschine ergeben sich aus den weiteren abhängigen Ansprüchen, wobei sich ein besonders leicht zu automatisierender Wickelvorgang dadurch realisieren lässt, dass von den fünf Wicklungssträngen nur einer einen unregelmäßigen Wicklungsabschnitt aufweist, welcher durch die Anschlussdrähte vorzugsweise aller Wicklungsstränge auf dem Wickelkopf fixiert ist. Diese Fixierung erfolgt vorzugsweise dadurch, dass der oder die unregelmäßigen Wicklungsabschnitte zumindest teilweise durch über den unregelmäßigen Wicklungsabschnitten verdrillte Endabschnitte der Anschlussdrähte der Wicklungsstränge auf dem Wickelkopf festgelegt werden.

Weiterhin ist es zweckmäßig, wenn sich die unregelmäßigen Wicklungsabschnitte zwischen zwei Wicklungsteilsträngen über eine wenigsten der zweifachen, vorzugsweise über eine der vierfachen, Phasenzahl entsprechende Anzahl von Nuten erstrecken. Hierdurch erreicht man, dass die entsprechenden Wicklungsanfänge und Wicklungsenden auf dem Wickelkopf um einen vergleichbaren Betrag zueinander versetzt werden.

Vorzugsweiseweise sind alle Wicklungsstränge derart ausgeführt, dass die Teilwicklungen aus durchgehendem Draht gewickelt sind. Der Fertigungsaufwand wird hierdurch deutlich reduziert. Zweckmäßigerweise sind hierbei die Wicklungsstränge als verteilte Wellenwicklungen ausgebildet, wobei die Drahtabgänge der Spulenseiten in beide Richtungen des Wickelkopfes verlaufen. Auf diese Weise werden die Kräfte auf die Wicklungsdrähte insbesondere an den Nutenden reduziert, wodurch einerseits die Gefahr von Beschädigungen der Isolation der Drähte verringert und andererseits der Füllfaktor der Nuten erhöht werden kann.

Die Wicklungsstränge sind in den Wickelköpfen radial geschichtet und zwar vorzugsweise derart, dass der oder die Wicklungsstränge mit einem oder mehreren unregelmäßigen Wicklungsabschnitten zwischen den Wicklungsteilsträngen radial zwischen Wicklungssträngen ohne unregelmäßige Wicklungsabschnitte angeordnet sind. Auf diese Weise erhält man einerseits eine kompakte Schichtung in den Wickelköpfen und andererseits eine gute Fixierung der unregelmäßigen Wicklungsabschnitte. Der gesamte Wicklungsaufbau am Statorumfang erfolgt dabei vorzugsweise derart, dass jeweils zwischen zwei benachbarten Nuten mit Anschlussdrähten der Wicklungsstränge vier Nuten ohne Anschlussdrähte liegen. Auf diese Weise können der Wickelkopfaufbau und die Verteilung der Wicklungsanschlüsse am Statorumfang sehr gleichmäßig werden.

Ein besonders vorteilhaftes Verfahren zur Herstellung der erfindungsgemäßen elektrischen Maschine erhält man dadurch, dass in mindestens einem Wicklungsstrang zunächst wenigstens zwei, über wenigstens einen Drahtabschnitt verbundene Wicklungsteilstränge gewickelt werden, welche anschließend in Umfangsrichtung gegeneinander verdreht werden und dabei durch den wenigstens einen, den unregelmäßigen Wicklungsabschnitt bildenden Drahtabschnitt miteinander verbunden sind. Auf diese Weise kann der erfindungsgemäße Wicklungsaufbau mit standardisierten Wickelmaschinen gefertigt werden ohne Bereitstellung teurer Neukonstruktionen für die Fertigung der Wicklung. Es ist dabei vorgesehen, dass die Wicklungsteilstränge für den anschließenden Einziehvorgang in die Nuten des Stators mit einem Verdrehwinkel der Wicklungsteilstränge gegeneinander verdreht werden, welcher wenigstens dem zweifachen Wert des durch die Polzahl geteilten Gesamtumfangswinkels von 360° entspricht. Besonders günstig ist es hierbei, wenn die Wicklungsteilstränge zunächst im Wesentlichen kreisförmig oder als Vieleck gewickelt werden.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: einen Längsschnitt durch einen Wechselstromgenerator für Kraftfahrzeuge mit einem Klauenpolrotor,
- Figur 2: ein Schaltschema eines fünfsträngigen Wechselstromgenerators mit nachgeordnetem Gleichrichter,
- Figur 3: ein erstes Wicklungsschema eines erfindungsgemäß ausgeführten Stators mit einer einfachen Wellenwicklung mit zwei Spulenseiten in jeder Nut,
- Figur 4: einen Ausschnitt aus einer Abwicklung eines Stators mit einer Wicklung gemäß Figur 3,
- Figur 5: ein zweites Wicklungsschema eines erfindungsgemäß ausgeführten Stators mit einer verteilten Wellenwicklung mit zwei Spulenseiten in jeder Nut,
- Figur 6: einen Ausschnitt aus einer Abwicklung eines Stators mit einer Wicklung gemäß Figur 5,
- Figur 7: ein drittes Wicklungsschema eines erfindungsgemäß ausgeführten Stators mit einer einfachen Wellenwicklung mit vier Spulenseiten in jeder Nut,
- Figur 8: einen Ausschnitt aus einer Abwicklung eines Stators mit einer Wicklung gemäß Figur 7,
- Figur 9: ein viertes Wicklungsschema eines erfindungsgemäß ausgeführten Stators mit einer verteilten Wellenwicklung mit vier Spulenseiten in jeder Nut,
- Figur 10: einen Ausschnitt aus einer Abwicklung eines Stators mit einer Wicklung gemäß Figur 9,
- Figuren 11a bis 11c: eine schematisierte Darstellung der wichtigsten Ausführungsstadien bei der Herstellung einer erfindungsgemäßen sternförmigen Wicklungseinheit mit gegeneinander verdrehten Teilwicklungen und einem die Teilwicklungen verbindenden unregelmäßigen Wicklungsabschnitt und
- Figur 12: ein Werkzeug zum Montieren einer erfindungsgemäßen Wicklungseinheit in einem kreisringförmigen Statorblechpaket.

### Ausführungsformen der Erfindung

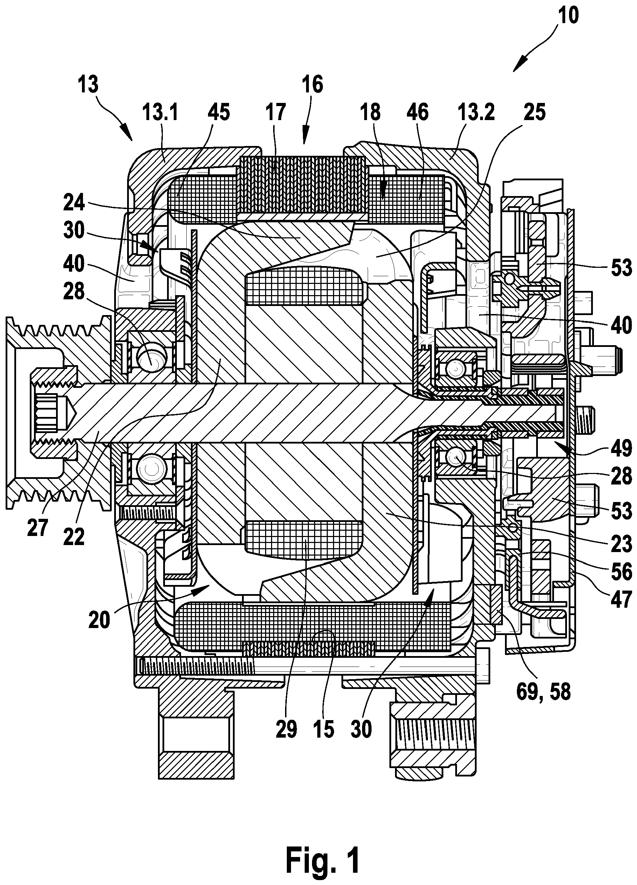

In Figur 1 ist ein Schnitt durch einen Wechselstromgenerator 10 für Kraftfahrzeuge dargestellt. Dieser weist unter anderem ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen Stator 16 auf, mit einem kreisringförmigen Blechpaket 17, in dessen nach innen offene und sich axial erstreckende Nuten 15 eine Ständerwicklung 18 eingelegt ist. Der ringförmige Stator 16 umgibt mit seiner radial nach innen gerichteten Oberfläche einen elektromagnetisch erregten Rotor 20, der als sechzehnpoliger Klauenpolrotor ausgebildet ist. Der Rotor 20 besteht unter anderem aus zwei Klauenpolplatinen 22 und 23, an deren Außenumfang sich jeweils acht in axialer Richtung erstreckende Klauenpolfinger 24 und 25 angeordnet sind. Beide Klauenpolplatinen 22 und 23 sind im Rotor 20 derart angeordnet, dass ihre sich in axialer Richtung erstreckenden Klauenpolfinger 24, 25 am Umfang des Rotors 20 einander als N-und S-Pole abwechseln. Es ergeben sich dadurch magnetisch erforderliche Klauenpolzwischenräume zwischen den gegensinnig magnetisierten Klauenpolfingern 24 und 25, welche wegen der sich zu ihrem freien Enden hin verjüngenden Klauenpolfinger leicht schräg zur Maschinenachse verlaufen. Für die folgende Beschreibung der Erfindung ist dieser Verlauf vereinfacht als axial bezeichnet.

Der Rotor 20 ist mittels einer Welle 27 und je einem auf je einer Seite befindlichen Wälzlager 28 in den jeweiligen Lagerschilden 13.1 beziehungsweise 13.2 drehbar gelagert. Er weist zwei axiale Stirnflächen auf, an denen jeweils ein Lüfter 30 befestigt ist. Diese Lüfter 30 bestehen im Wesentlichen aus einem plattenförmigen beziehungsweise scheibenförmigen Abschnitt, von dem Lüfterschaufeln in bekannter Weise ausgehen. Die Lüfter 30 dienen dazu, über Öffnungen 40 in den Lagerschilden 13.1 und 13.2 einen Luftaustausch zwischen der Außenseite und dem Innenraum der elektrischen Maschine 10 zu ermöglichen. Dazu sind die Öffnungen 40 an den axialen Enden der Lagerschilde 13.1 und 13.2 vorgesehen, über die mittels der Lüfter 30 Kühlluft in den Innenraum der elektrischen Maschine 10 eingesaugt wird. Die Kühlluft wird durch die Rotation der Lüfter 30 radial nach außen beschleunigt, so dass sie auch durch die kühlluftdurchlässigen Wickelköpfe 45 auf der Antriebsseite und 46 auf der Elektronikseite hindurchtreten kann. Durch diesen Effekt werden die Wickelköpfe gekühlt. Die Kühlluft nimmt nach dem Hindurchtreten durch die Wickelköpfe, beziehungsweise nach dem Umströmen dieser Wickelköpfe einen Weg radial nach außen durch nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine Schleifringbaugruppe 49 ab, die eine Erregerwicklung 29 mit Erregerstrom versorgt. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, welche im Lagerschild 13.2 befestigte Minusdioden 58 und in dieser Darstellung nicht gezeigte Plusdioden eines Gleichrichters 19 im Kühlkörper 53 in Form einer Brückenschaltung miteinander verbindet.

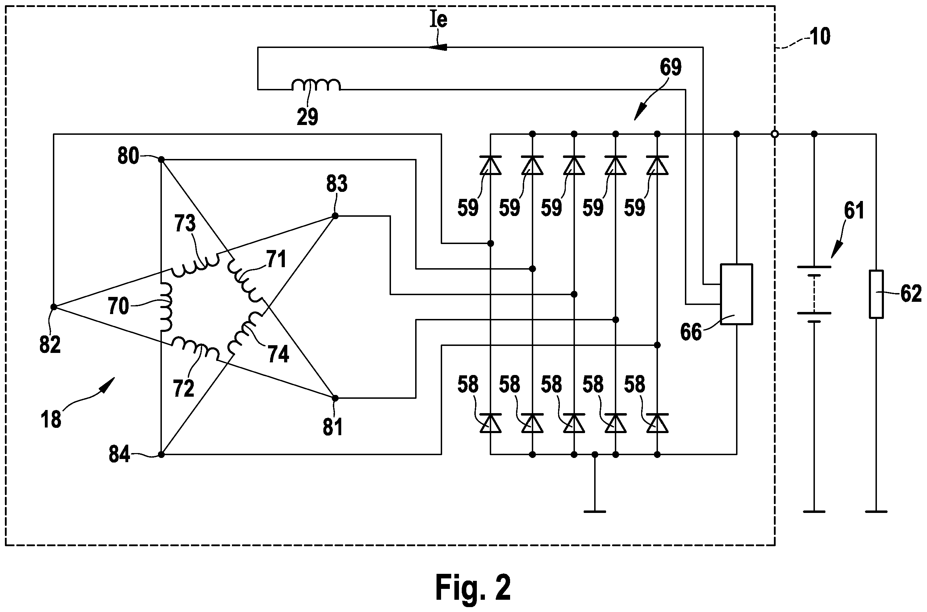

In Figur 2 ist ein Wechselstromgenerator 10 mit fünf phasenbildenden Wicklungssträngen 70, 71, 72, 73,74 anhand eines Schaltbildes dargestellt. Die Gesamtheit aller Wicklungsstränge 70, 71,72,73,74 bildet die Statorwicklung 18. Die fünf phasenbildenden Wicklungsstränge sind zu einer Grundschaltung als fünfzackiger Stern (Drudenfuß) verschaltet, wobei die jeweils in den Zacken des Sterns verschalteten Stränge einen Winkel von cirka 36° el. einschließen. An den Stromanschlüssen und Verschaltungspunkten 80, 81, 82, 83, 84 der Zacken des fünfzackigen Sterns ist ein Brückengleichrichter 69 angeschlossen.

Die Wicklungsstränge 70 bis 74 sind wie folgt verschaltet:

Der Wicklungsstrang 70 ist am Verschaltungspunkt 80 mit dem Wicklungsstrang 71 verbunden. Der Wicklungsstrang 71 ist an seinem gegenüber liegenden Ende am Verschaltungspunkt 81 mit dem Wicklungsstrang 72 verbunden. Der Wicklungsstrang 72 ist an seinem gegenüber liegenden Ende am Verschaltungspunkt 82 mit dem Wicklungsstrang 73 verbunden. Der Wicklungsstrang 73 ist an seinem gegenüber liegenden Ende am Verschaltungspunkt 83 mit dem Wicklungsstrang 74 verbunden. Der Wicklungsstrang 74 ist an seinem gegenüber liegenden Ende am Verschaltungspunkt 84 mit dem Wicklungsstrang 70 verbunden. Die Verschaltungspunkte befinden sich vorzugsweise axial auf oder neben dem elektronikseitigen Wickelkopf 46, um möglichst kurze Verschaltungswege zu realisieren. Hierzu treten die jeweils zu verschaltenden Anschlussdrähte der Wicklungsstränge 70 bis 74 eines Verschaltungspunktes 80 bis 84 vorzugsweise aus in Umfangsrichtung direkt benachbarten Nuten 15 aus. Die Verschaltungspunkte 80 bis 84 der Wicklungsstränge 70 bis 74 sind mit dem Brückengleichrichter 69 verbunden, der aus fünf Minusdioden 58 und fünf Plusdioden 59 aufgebaut ist. Gleichspannungsseitig ist ein Spannungsregler 66 parallel geschaltet, der durch Beeinflussung des Stromes Ie durch die Erregerwicklung 29 die Spannung des Generators regelt. Zusätzlich kann der Spannungsregler noch eine Verbindung zum Gleichrichter aufweisen, um den Spannungsabfall über einer Diode zu messen und hieraus die aktuelle Drehzahl des Generators zu ermitteln.

Das Bordnetz eines Fahrzeuges ist schematisch durch die Fahrzeugbatterie 61 und durch einen Verbraucher 62 dargestellt. Zur Verbesserung der Regelung kann die Erregerwicklung 29 alternativ mit Hilfe von vier Endstufen angesteuert werden, die zu einer H-Brückenschaltung verbunden sind. Hierdurch wird es möglich, in die Erregerwicklung 29 auch negative Erregerströme einzuprägen. Dies ergibt Vorteile beim Abregeln der Leistung des Generators, beziehungsweise in Bezug auf die Regelgeschwindigkeit, da zum schnellen Abregeln auch negative Spannungen an die Erregerwicklung 29 angelegt werden können.

Selbstverständlich lassen sich auch andere Phasenzahlen und Verschaltungsarten in bekannter Weise darstellen. Besonders zu erwähnen sind hierzu dreiphasige und sechsphasige Systeme in Stern- oder Dreieckschaltung, wie sie beispielsweise in der DE-Patentanmeldung 10 2007 025 971.0 näher erläutert sind.

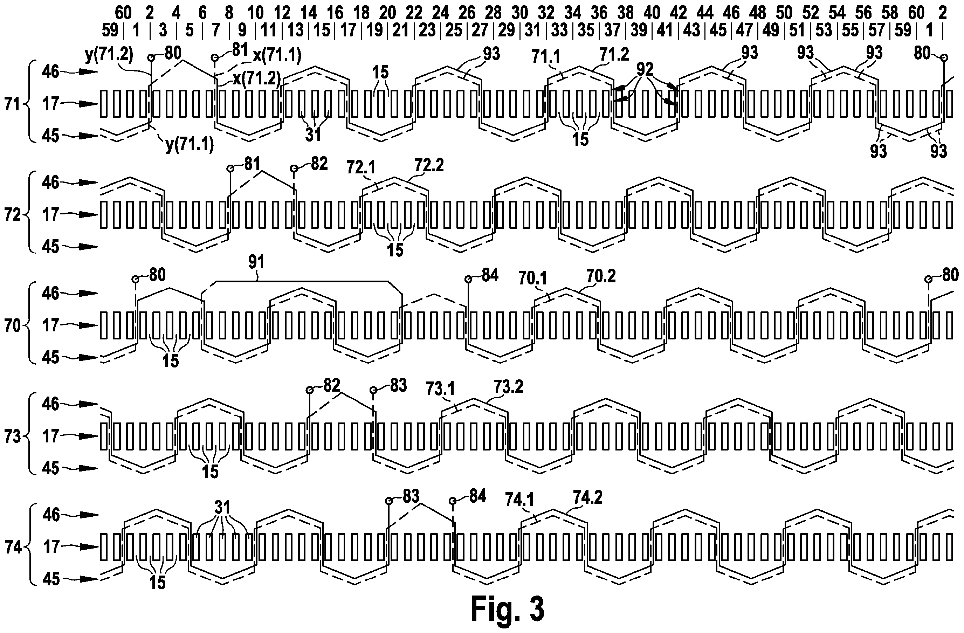

Figur 3 zeigt ein erfindungsgemäß ausgeführtes erstes Wickelschema einer einfachen Wellenwicklung mit zwei Spulenseiten in jeder Nut 15. Eine Wellenwicklung ist derart aufgebaut, dass sich die Wicklungsteilstränge wellenförmig in Umfangsrichtung des kreisringförmigen Blechpaketes 17 erstrecken. Hierbei bilden die jeweiligen Umkehrabschnitte der Wellenwicklung die Wickelköpfe 45,46, die geraden Abschnitte, die die Umkehrabschnitte verbinden, bilden jeweils die in den Nuten 15 einliegenden Spulenseiten 92. Eine einfache Wellenwicklung ist dadurch gekennzeichnet, dass sich die Wicklungsabschnitte 93, die den Wickelkopf einer Statorseite bilden und jeweils aus einer Nut 15 austreten, sich in die gleiche Umfangsrichtung erstrecken.

Das kreisringförmige Blechpaket 17 ist in einer abgerollten Form vereinfacht durch Nuten 15 und Zähne 31 schematisiert gezeichnet. Für die Darstellung der Statorwicklung 18 des fünfphasigen Stators 16 ist vereinfacht jeder phasenbildende Wicklungsstrang 70, 71, 72, 73, 74 separat gezeichnet. Tatsächlich liegen die phasenbildenden Wicklungsstränge 70 bis 74 zusammen in dem kreisringförmigen Blechpaket 17 ein.

Jeder phasenbildende Wicklungsstrang 70 bis 74 wird gebildet von Wicklungsteilsträngen 70.1 und 70.2, 71.1 und 71.2, 72.1 und 72.2, 73.1 und 73.2, 74.1 und 74.2. Die Wicklungsteilstränge bestehen aus p in Reihe geschalteten in den Nuten 15 einliegenden Spulenseiten 92, wobei p die Polzahl der Maschine ist. Die in den Nuten einliegenden Spulenseiten werden über die die Wickelköpfe 45,46 bildenden Abschnitte 93 verbunden. Der erste Anschluss eines Wicklungsteilstranges kommt dabei aus der Nut x und verläuft von dort aus bis zur Nut y in den Nuten x + m(a-1)) mod(p·m), bzw. x - m(a-1)) mod(p·m), wobei m die Anzahl der phasenbildenden Wicklungsstränge 70 bis 74 angibt und a eine natürliche Zahl zwischen 1 und der Polzahl p der elektrischen Maschine ist.

Für den ersten phasenbildenden Wicklungsstrang 71 liegt der Wicklungsanfang 81 des ersten Wicklungsteilstranges 71.1 in Nut sieben, also ist x von Wicklungsteilstrang 71.1 gleich sieben, oder kurz x(71.1)=7. Von dort aus erstreckt sich der Wicklungsteilstrang 71.1 in die Nuten zwölf, siebzehn, zweiundzwanzig, siebenundzwanzig, zweiunddreißig, siebenunddreißig, zweiundvierzig, siebenundvierzig, zweiundfünfzig, siebenundfünfzig und zwei. Das Wicklungsende y des Wicklungsteilstranges 71.1 liegt entsprechend in Nut zwei ein, also ist y(71.1)=2. Jeder Wicklungsteilstrang wird gebildet durch p Spulenseiten 92, die in Nuten 15 einliegen.

Der Wicklungsanfang x(71.2) des zweiten Wicklungsteilstranges 71.2 liegt wieder in Nut sieben, also ist x(71.2)=7. Er ist direkt mit dem Wicklungsende y(71.1) des Wicklungsteilstranges 71.1 in Nut zwei verbunden. Von dort aus erstreckt sich der Wicklungsteilstrang 71.2 in die Nuten zwölf, siebzehn, zweiundzwanzig, siebenundzwanzig, zweiunddreißig, siebenunddreißig, zweiundvierzig, siebenundvierzig, zweiundfünfzig, siebenundfünfzig und zwei. Das Wicklungsende des Wicklungsteilstranges 71.2 liegt entsprechend in Nut zwei ein, also ist y(71.2)=2. Das Wicklungsende des Wicklungsteilstranges 71.2 bildet gleichzeitig das Wicklungsende des Wicklungsstranges 71, also gilt y(71.2)=y(71)=2 und wird auf den Verschaltungspunkt 80 geführt. Der Anfang des Wicklungsteilstranges 71.1 bildet gleichzeitig den Anfang des phasenbildenden Wicklungsstranges 71, also ist x(71.1)=x(71)=7 und wird auf den Verschaltungspunkt 81 geführt.

Wenn die zu verbindenden Stranganschlüsse 80 bis 84 aus benachbarten Nuten 15 austreten sollen ergibt sich daraus für den ersten Wicklungsteilstrang 72.1 des Wicklungsstranges 72, dass der Wicklungsanfang des ersten Wicklungsteilstranges 72.1 in Nut dreizehn liegt, also x(72.1)=13. Von dort aus erstreckt sich der Wicklungsteilstrang 72.1 in die Nuten achtzehn, dreiundzwanzig, achtundzwanzig, dreiunddreißig, achtunddreißig, dreiundvierzig, achtundvierzig, dreiundfünfzig, achtundfünfzig, drei und acht. Das Wicklungsende des Wicklungsteilstranges 72.1 liegt entsprechend in Nut acht ein, also y(72.1)=8.

Der Wicklungsanfang des zweiten Wicklungsteilstranges 72.2 liegt wiederum in Nut dreizehn, also x(72.2)=13, und ist direkt mit dem Wicklungsende des Wicklungsteilstranges 72.1 in Nut acht verbunden. Von dort aus erstreckt sich der Wicklungsteilstrang 72.2 in die Nuten achtzehn, dreiundzwanzig, achtundzwanzig, dreiunddreißig, achtunddreißig, dreiundvierzig, achtundvierzig, dreiundfünfzig, achtundfünfzig, drei und acht. Das Wicklungsende des Wicklungsteilstranges 72.2 liegt entsprechend in Nut acht ein, also y(72.2)=8. Das Wicklungsende des Wicklungsteilstranges 72.2 bildet gleichzeitig das Wicklungsende des phasenbildenden Wicklungsstranges 72, also y(72.2)=y(72)=8, und wird auf den Verschaltungspunkt 81 geführt. Der Anfang des Wicklungsteilstranges 72.1 bildet gleichzeitig den Anfang des phasenbildenden Wicklungsstranges 72, also x(72.1)=x(72)=13 und wird auf den Verschaltungspunkt 82 geführt.

Für den ersten Wicklungsteilstrang 73.1 des phasenbildenden Wicklungsstranges 73 ergibt sich daraus, dass der Wicklungsanfang des ersten Wicklungsteilstranges 73.1 in Nut neunzehn liegen muss, also x(73.1)=19. Von dort aus erstreckt sich der Wicklungsteilstrang 73.1 in die Nuten vierundzwanzig, neunundzwanzig, vierunddreißig, neununddreißig, vierundvierzig, neunundvierzig, vierundfünfzig, neunundfünfzig, vier, neun und vierzehn. Das Wicklungsende des Wicklungsteilstranges 73.1 liegt entsprechend in Nut vierzehn ein, also y(73.1)=14.

Der Wicklungsanfang des zweiten Wicklungsteilstranges 73.2 liegt in Nut neunzehn, also ist x(73.2)=19 und ist direkt mit dem Wicklungsende des Wicklungsteilstranges 73.1 in Nut vierzehn verbunden. Von dort aus erstreckt sich der Wicklungsteilstrang 73.2 in die Nuten vierundzwanzig, neunundzwanzig, vierunddreißig, neununddreißig, vierundvierzig, neunundvierzig, vierundfünfzig, neunundfünfzig, vier, neun und vierzehn. Das Wicklungsende des Wicklungsteilstranges 73.2 liegt entsprechend in Nut vierzehn ein, also y(73.2)=14. Das Wicklungsende des Wicklungsteilstranges 73.2 bildet gleichzeitig das Wicklungsende des phasenbildenden Wicklungsstranges 73, also y(73.2)=y(73)=14, und wird auf den Verschaltungspunkt 82 geführt. Der Anfang des Wicklungsteilstranges 73.1 bildet gleichzeitig den Anfang des phasenbildenden Wicklungsstranges 73, also x(73.1)=x(73)=19, und wird auf den Verschaltungspunkt 83 geführt.

Für den phasenbildenden Wicklungsstranges 74 ergibt sich daraus, dass der Wicklungsanfang des ersten Wicklungsteilstranges 74.1 in Nut fünfundzwanzig liegen muss, also x(74.1)=25. Von dort aus erstreckt sich der Wicklungsteilstrang 74.1 in die Nuten dreißig, fünfunddreißig, vierzig, fünfundvierzig, fünfzig, fünfundfünfzig, sechzig, fünf, zehn, fünfzehn und zwanzig. Das Wicklungsende des Wicklungsteilstranges 74.1 liegt entsprechend in Nut zwanzig ein, also y(74.1)=20.

Der Wicklungsanfang des zweiten Wicklungsteilstranges 74.2 liegt in Nut fünfundzwanzig, also x(74.2)=25, und ist direkt mit dem Wicklungsende des Wicklungsteilstranges 74.1 in Nut zwanzig verbunden. Von dort aus erstreckt sich der Wicklungsteilstrang 74.2 in die Nuten dreißig, fünfunddreißig, vierzig, fünfundvierzig, fünfzig, fünfundfünfzig, sechzig, fünf, zehn, fünfzehn und zwanzig. Das Wicklungsende des Wicklungsteilstranges 74.2 liegt entsprechend in Nut zwanzig ein, also y(74.2)=20. Das Wicklungsende des Wicklungsteilstranges 74.2 bildet gleichzeitig das Wicklungsende des Wicklungsstranges 74, also y(74.2)=y(74)=20, und wird auf den Verschaltungspunkt 83 geführt. Der Anfang des Wicklungsteilstranges 74.1 bildet gleichzeitig den Anfang des Wicklungsstranges 74, also x(74.1)=x(74)=25, und wird auf den Verschaltungspunkt 84 geführt.

Der phasenbildende Wicklungsteilstrang 70 weist gegenüber den phasenbildenden Wicklungssträngen 71,72,73,74 einen umgekehrten Wicklungssinn auf, d.h. die Wicklung erstreckt sich in Umfangsrichtung entgegen den anderen Wicklungssträngen 71,72,73,74. Für den ersten Wicklungsteilstrang 70.1 des Wicklungsstranges 70 ergibt sich daraus, dass sein Wicklungsanfang in Nut eins liegt, also x(70.1)=1. Von dort aus erstreckt sich der Wicklungsteilstrang 70.1 in die Nuten sechsundfünfzig, einundfünfzig, sechsundvierzig, einundvierzig, sechsunddreißig, einunddreißig, sechsundzwanzig, einundzwanzig, sechzehn, elf und sechs. Das Wicklungsende des Wicklungsteilstranges 70.1 liegt entsprechend in Nut sechs ein, also y(70.1)=6.

Der Wicklungsanfang des zweiten Wicklungsteilstranges 70.2 liegt in Nut einundzwanzig, also x(70.2)=21, und ist mit dem Wicklungsende des Wicklungsteilstranges 70.1 in Nut sechs über einen unregelmäßigen Wicklungsabschnitt 91 verbunden. Von dort aus erstreckt sich der Wicklungsteilstrang 70.2 in die Nuten sechzehn, elf, sechs, eins, sechsundfünfzig, einundfünfzig, sechsundvierzig, einundvierzig, sechsunddreißig, einunddreißig und sechsundzwanzig. Das Wicklungsende des Wicklungsteilstranges 70.2 liegt entsprechend in Nut sechsundzwanzig ein, also y(70.2)=26. Das Wicklungsende des Wicklungsteilstranges 70.2 bildet gleichzeitig das Wicklungsende des phasenbildenden Wicklungsstranges 70, also y(70.2)=y(70)=26, und wird auf den Verschaltungspunkt 84 geführt. Der Anfang des Wicklungsteilstranges 70.1 bildet gleichzeitig den Anfang des phasenbildenden Wicklungsstranges 70, also x(70.1)=x(70)=1, und wird auf den Verschaltungspunkt 80 geführt.

Die Verschiebung Z' durch den unregelmäßigen Wicklungsabschnitt 91, d.h. die Nutziffer des Wicklungsanfanges des auf den unregelmäßigen Wicklungsabschnittes folgenden Wicklungsteilstranges minus der Nutziffer des Wicklungsendes des vor dem unregelmäßigen Wicklungsabschnitt liegenden Wicklungsteilstranges ist größer oder gleich der Phasenzahl m des Stators 16 und das Ende des vorhergehenden Wicklungsteilstranges y(70.1) ist ungleich dem Ende des nachfolgenden Wicklungsteilstranges y(70.2) .

In diesem Beispiel ist die Länge der Verschiebung Z' durch den unregelmäßigen Abschnitt 91 x(70.2) - y(70.1) = 21-6 = 15 und y(70.1)=6 ist ungleich y(70.2)=26. Die Verschiebung Z des Wicklungsstrangendes berechnet sich aus der Nutziffer des Endes des Wicklungsstranges minus der Nutziffer des Endes des ersten Wicklungsteilstranges. In diesem Beispiel ist entsprechend Z(70)=y(70)-y(70.1) = 26-6 = 20. Es ist vorteilhaft, wenn Z größer oder gleich der doppelten Strangzahl m, vorzugsweise größer oder gleich dem vierfachen der Strangzahl m ist. Die phasenbildenden Wicklungsstränge 71,72,73,74 weisen keinen unregelmäßigen Wicklungsabschnitt auf. Dies zeigt sich entsprechend dadurch, das die Verschiebung Z der Wicklungen 0 ist: Z(71)=y(71)-y(71.1)=2-2=0; Z(72) = y(72)-y(72.1)=8-8=0; Z(73) = y(73)-y(73.1)=14-14=0; Z(74) = y(74)-y(74.1)=20-20=0.

Durch den unregelmäßigen Wicklungsabschnitt 91 lassen sich die Wicklungsanschlüsse fast beliebig auf dem Wickelkopf 46 verteilen, wobei jede Nut 15 mit der gleichen Anzahl an einliegenden Spulenseiten 92 befüllt ist. Hierdurch wird eine homogene Kraftanregung auf die Statorzähne 31 erreicht, die zu einem niedrigen Magnetgeräusch führt. Der Anfang und das Ende des unregelmäßigen Wicklungsabschnittes 91 sind am Wickelkopf 46 gesichert, da der unregelmäßige Wicklungsabschnitt 91 in Spulenseiten 92 bildende Abschnitte übergeht, die in Nuten 15 einliegen.

Die phasenbildenden Wicklungsstränge 70 bis 74 werden bevorzugt radial geschichtet in den Wickelköpfen 45, 46 angeordnet. Ein Beispiel für diese Schichtung ist im Wickelschema der Figur 3 dargestellt. Der Wicklungsstrang 71 liegt radial außen. Hierauf werden radial nach innen die wickelkopfbildenden Wicklungsabschnitte der Wicklungsstränge 72, 70, 73, 74 gefügt. Hierdurch wird erreicht, dass der unregelmäßige Abschnitt 91 zusätzlich zwischen den zu den Verschaltungspunkten der Stranganschlüsse 81, 82, 83 führenden Anfängen der Wicklungsstränge 71, 72, 73 und den Enden der Wicklungsstränge 72, 73, 74 gehalten wird. Dies kann weiter verbessert werden, indem die Anschlussdrähte an den Verschaltungspunkten 80, 81, 82, 83, 84 verdrillt werden. Zusätzlich kann der unregelmäßige Wicklungsabschnitt 91 durch Harz am Wickelkopf fixiert werden.

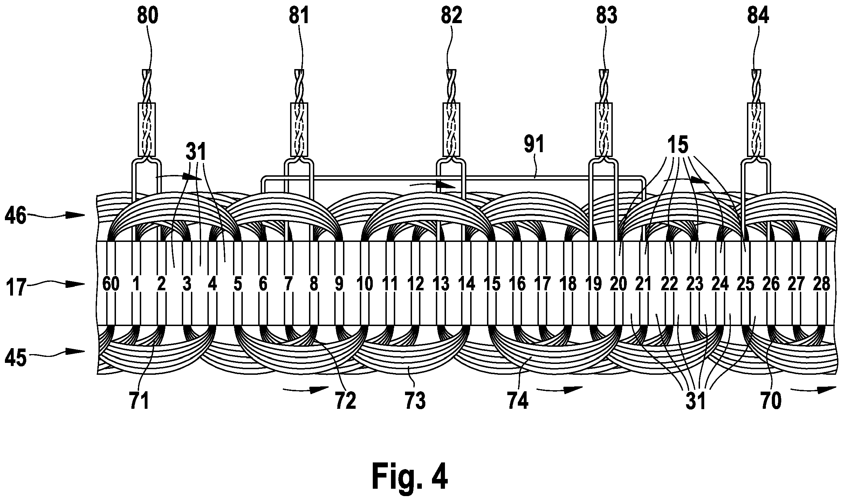

In Figur 4 ist ein Ausschnitt des Stators 16 gemäß Figur 3 aus einer Ansicht radial von innen dargestellt. Die phasenbildenen Wicklungsstränge 70, 71, 72, 73, 74 der Statorwicklung 18 sind in die Nuten 15 des kreisringförmigen Blechpakets 17 eingelegt. Die Nuten 15 des Blechpakets 17 sind jeweils durch Zähne 31 getrennt. Die Wicklungsstränge 70 bis 74 liegen im elektronikseitigen Wickelkopf 46 und im antriebsseitigen Wickelkopf 45 radial geschichtet aufeinander.

Entsprechend der Darstellung in Figur 3 liegt der radial äußerste Wicklungsstrang 71 mit seinem Anfang in Nut sieben und ist über den Verschaltungspunkt 81 mit dem Ende des Wicklungsstranges 72 verbunden. Das Ende des Wicklungsstranges 71 liegt in Nut zwei und ist über den Verschaltungspunkt 80 mit dem Anfang des Wicklungsstranges 70 verbunden. Der radial zweitäußerste Wicklungsstrang 72 liegt mit seinem Anfang in Nut dreizehn und ist über den Verschaltungspunkt 82 mit dem Ende des Wicklungsstranges 73 verbunden. Das Ende des Wicklungsstranges 72 liegt in der Nut acht und ist über den Verschaltungspunkt 81 mit dem Anfang des Wicklungsstranges 71 verbunden. Der radial zweitinnerste Wicklungsstrang 73 liegt mit seinem Anfang in Nut neunzehn und ist über den Verschaltungspunkt 83 mit dem Ende des Wicklungsstranges 74 verbunden. Das Ende des Wicklungsstranges 73 liegt in der Nut vierzehn und ist über den Verschaltungspunkt 82 mit dem Anfang des Wicklungsstranges 72 verbunden. Der radial innerste Wicklungsstrang 74 liegt mit seinem Anfang in Nut fünfundzwanzig und ist über den Verschaltungspunkt 84 mit dem Anfang des Wicklungsstranges 70 verbunden. Das Ende des Wicklungsstranges 74 liegt in der Nut zwanzig und ist über den Verschaltungspunkt 83 mit dem Anfang des Wicklungsstranges 73 verbunden. Der radial mittlere Wicklungsstrang 70 liegt mit seinem Anfang in Nut eins und ist über den Verschaltungspunkt 80 mit dem Ende des Wicklungsstranges 71 verbunden. Das Ende des Wicklungsstranges 70 liegt in der Nut sechsundzwanzig und ist über den Verschaltungspunkt 84 mit dem Anfang des Wicklungsstranges 74 verbunden.

Der Wicklungsstrang 70 hat einen unregelmäßigen Wicklungsabschnitt 91, der die Nuten einundzwanzig und sechs miteinander verbindet. Die Länge der Verschiebung Z' durch den unregelmäßigen Wicklungsabschnittes 91 ist hierbei x(70.2) - y(70.1) mod(p·m) = 21 - 6 = 15. Die Gesamtsumme der Verschiebung Z des Wicklungsstrangs ist entsprechend Z(70)=y(70)-y(70.1) = 26-6 = 20. Der unregelmäßige Wicklungsabschnitt 91 des Wicklungsstranges 70 wird an den Verschaltungspunkten 81,82 und 83 durch die Anfänge bzw. Enden der Wicklungsstränge 71,72,73,74 fixiert. Diese Fixierung kann durch Verdrillung der Wicklungsanfänge der Wicklungsstränge mit den Enden der Wicklungsstränge an den jeweiligen Verschaltungspunkten 81,82,83 verbessert werden. In einem weiteren Montageschritt können Isolationshülsen über die verdrillten Enden bzw. Anfänge der Wicklungsstränge gezogen werden, um die Isolation zwischen dem unregelmäßigen Wicklungsabschnitt 91 und den Anfängen, bzw. Enden der Wicklungen zu verbessern. Dies erhöht zusätzlich den mechanischen Zusammenhalt.

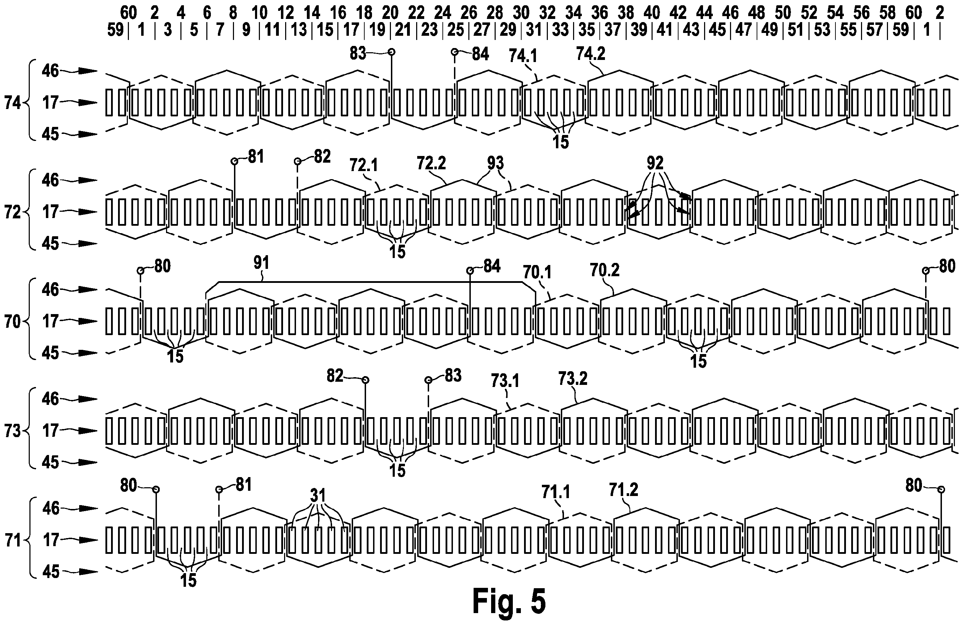

Figur 5 zeigt ein zweites Wickelschema des Stators 16 mit einer verteilten Wellenwicklung mit ebenfalls zwei Spulenseiten 92 in jeder Nut 15. Als verteilte Wicklung wird hier und in den folgenden Ausführungen ein Wickelschema bezeichnet, bei dem die Wicklungsabschnitte 93, die den Wickelkopf einer Statorseite bilden und jeweils aus einer Nut 15 austreten, sich in verschiedene Umfangsrichtungen erstrecken. Hierdurch können der Füllfaktor der Nuten und der Drahtdurchmesser der Leiter vergrößert werden, da die Einzugskraft für die Wicklung und die Reibung an den Zahnflanken gegenüber der Ausführung mit einer einfachen Wellenwicklung geringer ist.

Grundsätzlich ist die Wicklung in Figur 5 gleich aufgebaut wie die Wicklung in Figur 3, es liegen hier in jeder Nut 15 zwei Leiter und jede phasenbildende Wicklung 70 bis 74 besitzt zwei in Reihe geschaltete Wicklungsteilstränge 70.1 und 70.2; 71.1 und 71.2; 72.1 und 72.2; 73.1 und 73.2; 74.1 und 74.2. Die Anfänge und Enden der Wicklungsteilstränge eines phasenbildenden Wicklungsstranges sind hierbei um einen Polteilung versetzt und miteinander so verschaltet, dass sich eine Wicklungssinnumkehr ergibt.

Unterschiede bestehen in der Gestaltung der Wicklung 70, bei der der Wicklungssinn gegenüber den restlichen Phasenwicklungen vertauscht ist. Der Wicklungsaufbau und der Wicklungssinn der phasenbildenden Wicklungen 71,72,73,74 ist identisch. Durch die Aufteilung der Wicklung 70 in zwei Teilwicklungen besteht die Möglichkeit zur Anordnung eines unregelmäßigen Wicklungsabschnittes 91.

Der Wicklungsanfang des ersten Wicklungsteilstranges 70.1 liegt wiederum in Nut 1, also x(70.1)=1. Von dort aus erstreckt sich der Wicklungsteilstrang 70.1 in die Nuten sechsundfünfzig, einundfünfzig, sechsundvierzig, einundvierzig, sechsunddreißig, einunddreißig, sechsundzwanzig, einundzwanzig, sechzehn, elf und sechs. Das Ende des Wicklungsteilstranges 70.1 liegt entsprechend in Nut sechs ein, also ist y(70.1)=6. Der Wicklungsanfang des zweiten Wicklungsteilstranges 70.2 liegt in der Nut einunddreißig, also ist x(70.2)=31 und er ist mit dem Wicklungsende des Wicklungsteilstranges 70.1 in der Nut sechs über einen unregelmäßigen Wicklungsabschnitt 91 verbunden. Von dort aus erstreckt sich der Wicklungsteilstrang 70.2 in die Nuten sechsunddreißig, einundvierzig, sechsundvierzig, einundfünfzig, sechsundfünfzig, eins, sechs, elf, sechzehn, einundzwanzig und sechsundzwanzig. Das Wicklungsende des Wicklungsteilstranges 70.2 liegt entsprechend in der Nut sechsundzwanzig ein, also ist y(70.2)=26.

Das Wicklungsende des Wicklungsteilstranges 70.2 bildet gleichzeitig das Wicklungsende des phasenbildenden Wicklungsstranges 70, also ist y(70.2)=y(70)=26 und wird auf den Verschaltungspunkt 84 geführt. Der Anfang des Wicklungsteilstranges 70.1 bildet gleichzeitig den Anfang des phasenbildenden Wicklungsstranges 70, also ist x(70.1)=x(70)=1 und wird auf den Verschaltungspunkt 80 geführt.

Der unregelmäßige Wicklungsabschnitt 91 bewirkt, das die Verschiebung Z' der Wicklungsteilstränge, d.h. die Nutziffer des Wicklungsanfanges des auf den unregelmäßigen Wicklungsabschnitt folgenden Wicklungsteilstranges minus der Nutziffer des Wicklungsendes des vor dem unregelmäßigen Wicklungsabschnitt liegenden Wicklungsteilstranges größer oder gleich der Phasenzahl m des Stators ist. Gleichzeitig ist das Ende des vorhergehenden Wicklungsteilstranges y(70.1) ungleich dem Ende des nachfolgenden Wicklungsteilstranges y(70.2).

Ist die Länge der Verschiebung Z' durch den unregelmäßigen Abschnitt 91 negativ, so wird das Ergebnis mod(p·m) genommen. In diesem Beispiel ist die Länge der Verschiebung Z' durch den unregelmäßigen Abschnitt y(70.1) -x(70.2) mod(p·m)=(6-31) mod(60)=25 und y(70.1)=6 ist ungleich y(70.2)=26. Die Gesamtsumme der Verschiebung Z berechnet sich aus der Nutziffer des Endes des Wicklungsstranges minus der Nutziffer des Endes des ersten Wicklungsteilstranges, wobei auch hier, wenn das Ergebnis negativ ist, das Ergebnis mod(p·m) genommen wird. In diesem Beispiel ist entsprechend Z(70)=(y(70)-(y(70.1)mod(p·m)=(26-6)mod(60)=20. Es ist vorteilhaft, wenn Z größer oder gleich dem zweifachen der Strangzahl m, vorzugsweise größer oder gleich dem vierfachen der Strangzahl m ist. Die phasenbildenden Wicklungsstränge 71, 72, 73,74 weisen keine unregelmäßigen Wicklungsabschnitte auf. Dies zeigt sich dadurch, dass Z der Wicklung Null ist: Z(71)=y(71)-y(71.1)=2-2=0; Z(72)=y(72)-y(72.1)=8-8=0; Z(73)=y(73)-y(73.1)=14-14=0; Z(74)=y(74)-y(74.1)=20-20=0.

Durch den unregelmäßigen Wicklungsabschnitt 91 lassen sich auch bei dieser Ausführung die Wicklungsanschlüsse fast beliebig auf dem Wickelkopf 45 oder 46 verteilen, wobei wiederum jede Nut 15 mit der gleichen Anzahl von in den Nuten einliegenden Spulenseiten 92 befüllt ist. Hierdurch wird eine homogene Kraftanregung auf die Statorzähne 31 erreicht, die zu einem niedrigen Magnetgeräusch führt, wobei der Anfang und das Ende des unregelmäßigen Wicklungsabschnittes 91 in Spulenseiten 92 übergeht, die in den Nuten einliegen.

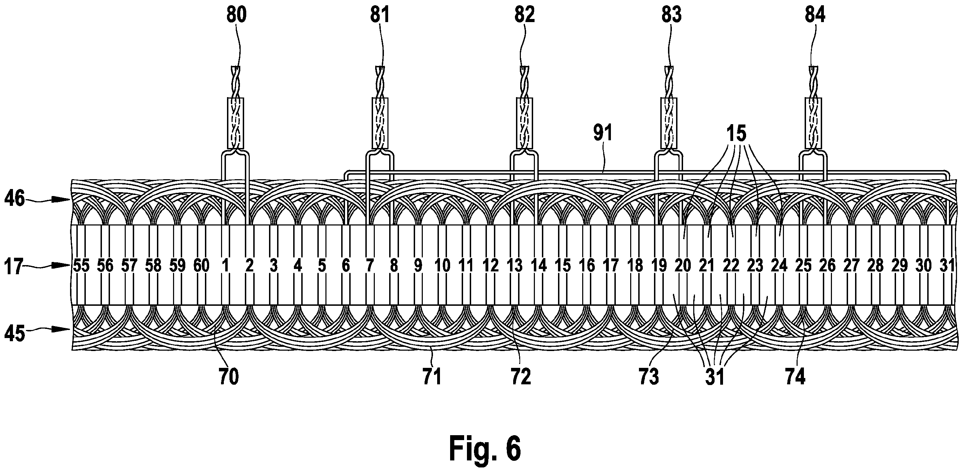

Figur 6 zeigt einen Abschnitt des Stators 16, entsprechend dem Wickelschema in Figur 5 aus einer Ansicht radial von innen. Die phasenbildenden Wicklungsstränge 70,71,72,73,74 werden entsprechend der Ausführung gemäß Figur 4 wie folgt radial im Wickelkopf 45,46 geschichtet: Der Wicklungsstrang 74 liegt radial außen. Hierauf werden radial nach innen die wickelkopfbildenden Abschnitte der Wicklungsstränge 72,70,73 und 71 gefügt. Dadurch wird der unregelmäßige Abschnitt 91 zusätzlich zwischen den zu den Verschaltungspunkten 81,82,83 und 84 führenden Anfängen der Wicklungsstränge 72,73 und 74 und den Wicklungsenden aller Wicklungsstränge 70 bis 74 gehalten Die Anschlussdrähte sind an den Verschaltungspunkten 80 bis 84 wiederum verdrillt und der unregelmäßige Wicklungsabschnitt kann zusätzlich über Harz am Wickelkopf fixiert werden.

Die phasenbildenden Wicklungsstränge 70 bis 74 der Statorwicklung 18 sind in die Nuten 15 des kreisringförmigen Blechpakets 17 eingelegt, welche jeweils durch Zähne 31 getrennt sind. Sie sind im elektronikseitigen Wickelkopf 46 radial derart geschichtet, dass der Wicklungsstrang 74 außen liegt. Sein Wicklungsanfang liegt in der Nut fünfundzwanzig und ist dort über den Verschaltungspunkt 84 mit dem Ende des Wicklungsstranges 70 verbunden. Das Ende des Wicklungsstranges 74 liegt in Nut zwanzig und ist über den Verschaltungspunkt 83 mit dem Anfang des Wicklungsstranges 73 verbunden. Der radial zweitäußerste Wicklungsstrang 72 liegt mit seinem Anfang in Nut dreizehn und ist über den Verschaltungspunkt 82 mit dem Ende des Wicklungsstranges 73 verbunden. Das Ende des phasenbildenden Wicklungsstranges 72 liegt in der Nut acht und ist über den Verschaltungspunkt 81 mit dem Anfang des Wicklungsstranges 71 verbunden. Der radial zweitinnerste Wicklungsstrang 73 liegt mit seinem Anfang in Nut neunzehn und ist über den Verschaltungspunkt 83 mit dem Ende des Wicklungsstranges 74 verbunden. Das Ende des Wicklungsstranges 73 liegt in der Nut vierzehn und ist über den Verschaltungspunkt 82 mit dem Anfang des phasenbildende Wicklungsstranges 72 verbunden. Der radial innerste Wicklungsstrang 71 liegt mit seinem Anfang in Nut sieben und ist über den Verschaltungspunkt 81 mit dem Ende des phasenbildenden Wicklungsstranges 72 verbunden. Das Ende des Wicklungsstranges 71 liegt in der Nut zwei und ist über den Verschaltungspunkt 80 mit dem Anfang des Wicklungsstranges 70 verbunden.

Der radial mittlere Wicklungsstrang 70 liegt mit seinem Anfang in Nut eins und ist über den Verschaltungspunkt 80 mit dem Ende des Wicklungsstranges 71 verbunden. Das Ende des Wicklungsstranges 70 liegt in der Nut sechsundzwanzig und ist über den Verschaltungspunkt 84 mit dem Anfang des Wicklungsstranges 74 verbunden. Für den unregelmäßigen Wicklungsabschnitt 91 in dem phasenbildenden Wicklungsstrang 70 gilt, dass die Länge der durch diesen bedingten Verschiebung Z', d.h. dass die Nutziffer des Wicklungsanfangs des auf einen unregelmäßigen Wicklungsabschnitt folgenden Wicklungsteilstranges minus der Nutziffer des Wicklungsendes des vor dem unregelmäßigen Wicklungsabschnittes 91 liegenden Wicklungsteilstranges größer oder gleich der Phasenzahl m des Stators 16 ist und das Ende des vorhergehenden Wicklungsteilstranges y(70.1) ungleich dem Ende des nachfolgenden Wicklungsteilstranges y(70.2) ist. Ist die Länge der Verschiebung Z' durch den unregelmäßigen Abschnitt 91 negativ, so wird das Ergebnis mod(p·m) genommen. In diesem Beispiel ist die Länge der Verschiebung durch den unregelmäßigen Abschnitt x(70.2)-y(70.1)mod(p·m)=(31-6)mod(60)=25 und y(70.1)=6 ist ungleich y(70.2)=2. Die gesamte Verschiebung Z berechnet sich aus der Nutziffer des Endes des Wicklungsstranges minus der Nutziffer des Endes des ersten Wicklungsteilstranges, wobei auch hier, wenn das Ergebnis negativ ist, das Ergebnis mod(p·m) genommen wird. In diesem Beispiel ist entsprechend Z(70)=y(70)-(y(70.1)mod(p·m)=(26-6)mod(60)=20. Es ist vorteilhaft, wenn Z größer oder gleich dem zweifachen der Strangzahl m, vorzugsweise größer oder gleich dem vierfachen der Strangzahl m ist.

Der unregelmäßige Wicklungsabschnitt 91 des Wicklungsstranges 70 wird an den Verschaltungspunkten 81, 82,83 und 84 durch die Anfänge beziehungsweise Enden aller Wicklungsteilstränge 70 bis 74 fixiert. Dies Fixierung kann wiederum durch Verdrillung der Wicklungsanfänge der Wicklungsteilstränge mit den Enden der Wicklungsteilstränge zumindest an den Verschaltungspunkten 81 bis 84 verbessert werden. Wie bei der Anordnung gemäß Figur 4 ist es auch hier möglich, in einem weiteren Montageschritt Isolationshülsen über die verdrillten Enden, beziehungsweise Anfänge der Wicklungsteilstränge zu schieben, um die Isolation zwischen dem unregelmäßigen Wicklungsabschnitt 91 und den Anfängen beziehungsweise Enden der Wicklungen zu verbessern. Dies erhöht zusätzlich auch den mechanischen Zusammenhalt.

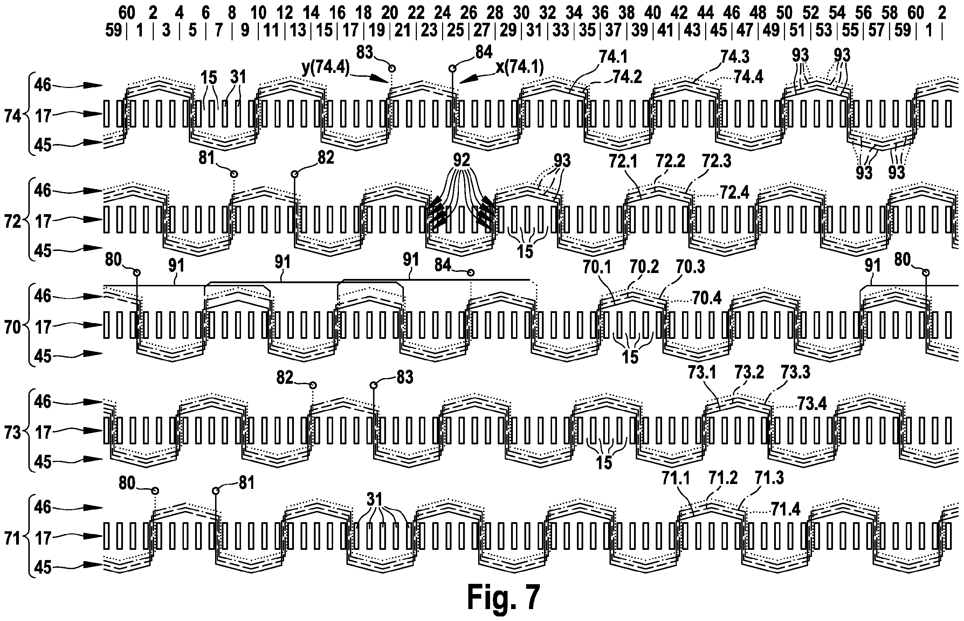

In Figur 7 ist ein drittes Wickelschema eines erfindungsgemäß ausgeführten Stators 16 dargestellt mit einer einfachen Wellenwicklung mit vier Spulenseiten 92 in jeder Nut 15. Grundsätzlich ist die Wicklung gleich aufgebaut wie die Wicklung in Figur 3, jedoch liegen hier in jeder Nut 15 vier Leiter statt zwei Leitern und jede phasenbildende Wicklung 70 bis 74 besitzt vier in Reihe geschaltete Wicklungsteilstränge 70.1 bis 70.4; 71.1 bis 71.4; 72.1 bis 72.4; 73.1 bis 73.4 und 74.1 bis 74.4. Die Enden der Wicklungsteilstränge und die Anfänge der nachfolgenden Wicklungsteilstränge der phasenbildenden Wicklungsstränge 71 bis 74 sind in gleicher Weise verbunden und liegen in den gleichen Nuten 15 wie bei der Anordnung in Figur 3.

Unterschiede bestehen in der Gestaltung der Wicklung 70. Hierbei ist die Wicklungsrichtung aller phasenbildenden Wicklungsstränge 70 bis 74 identisch. Durch die Aufteilung der Wicklung 70 in vier Teilwicklungen besteht die Möglichkeit zur Anordnung von drei unregelmäßigen Wicklungsabschnitten 91.

Der Wicklungsanfang des ersten Wicklungsteilstranges 70.1 liegt wiederum in Nut eins, also ist x(70.1)=1. Von dort aus erstreckt sich der Wicklungsteilstrang 70.1 in die Nuten sechs, elf, sechzehn, einundzwanzig, sechsundzwanzig, einunddreißig, sechsunddreißig, einundvierzig, sechsundvierzig, einundfünfzig und sechsundfünfzig. Das Wicklungsende des Wicklungsteilstranges 70.1 liegt entsprechend in Nut sechsundfünfzig ein, also ist y(70.1)=56. Der Wicklungsanfang des zweiten Wicklungsteilstranges 70.2 liegt in Nut elf, also ist x(70.2)=11 und er ist mit dem Wicklungsende des Wicklungsteilstranges 70.1 in Nut sechsundfünfzig über einen unregelmäßigen Wicklungsabschnitt 91 verbunden. Von dort aus erstreckt sich der Wicklungsteilstrang 70.2 in die Nuten sechzehn, einundzwanzig, sechsundzwanzig, einunddreißig, sechsunddreißig, einundvierzig, sechsundvierzig, einundfünfzig, sechsundfünfzig, eins und sechs. Das Wicklungsende des Wicklungsteilstranges 70.2 liegt entsprechend in Nut sechs ein, also ist y(70.2)=6. Der Wicklungsanfang des dritten Wicklungsteilstranges 70.3 liegt in Nut einundzwanzig, also ist x(70.3)=21 und er ist mit dem Wicklungsende des Wicklungsteilstranges 70.2 in Nut sechs über einen unregelmäßigen Wicklungsabschnitt 91 verbunden. Von dort aus erstreckt sich der Wicklungsteilstrang 70.3 in die Nuten sechsundzwanzig, einunddreißig, sechsunddreißig, einundvierzig, sechsundvierzig, einundfünfzig, sechsundfünfzig, eins, sechs, elf und sechzehn. Das Wicklungsende des Wicklungsteilstranges 70.3 liegt entsprechend in Nut sechzehn ein, also ist y(70.3)=16. Der Wicklungsanfang des vierten Wicklungsteilstranges 70.4 liegt in Nut einunddreißig, also ist x(70.4)=31 und er ist mit dem Wicklungsende des Wicklungsteilstranges 70.3 in Nut sechzehn über einen unregelmäßigen Wicklungsabschnitt 91 verbunden. Von dort aus erstreckt sich der Wicklungsteilstrang 70.4 in die Nuten sechsunddreißig, einundvierzig, sechsundvierzig, einundfünfzig, sechsundfünfzig, eins, sechs, elf, sechzehn, einundzwanzig und sechsundzwanzig. Das Wicklungsende des Wicklungsteilstranges 70.4 liegt entsprechend in Nut sechsundzwanzig ein, also ist y(70.4)=26.

Das Wicklungsende des Wicklungsteilstranges 70.4 bildet gleichzeitig das Wicklungsende des phasenbildenden Wicklungsstranges 70, also ist y(70.4)=y(70)=26 und wird auf den Verschaltungspunkt 84 geführt. Der Anfang des Wicklungsteilstranges 70.1 bildet gleichzeitig den Anfang des phasenbildenden Wicklungsstranges 70, also ist x(70.1)=x(70)=1 und wird auf den Verschaltungspunkt 80 geführt.

Die unregelmäßigen Wicklungsabschnitte 91 bewirken, dass die Verschiebung Z' der Wicklungsteilstränge, d.h. die Nutziffer des Wicklungsanfanges des auf den unregelmäßigen Wicklungsabschnitt folgenden Wicklungsteilstranges minus der Nutziffer des Wicklungsendes des vor dem unregelmäßigen Wicklungsabschnitt liegenden Wicklungsteilstranges größer oder gleich der Phasenzahl m des Stators ist. Gleichzeitig ist das Ende des vorhergehenden Wicklungsteilstranges y(70.1),y(70.2),y(70.3) ungleich dem Ende des nachfolgenden Wicklungsteilstranges y(70.2),y(70.3),y(70.4).

Ist die Länge der Verschiebung Z' durch den unregelmäßigen Abschnitt 91 negativ, so wird das Ergebnis mod(m·p) genommen. In diesem Beispiel ist die Länge der Verschiebung Z durch den unregelmäßigen Abschnitt (x(70.2) - y(70.1))mod(m·p) = 11-56 mod(m·p) = -45 mod(60)=15 und y(70.1)=56 ist ungleich y(70.2)=6, bzw. x(70.3) - y(70.2) = 21-6 = 15 und y(70.2)=6 ist ungleich y(70.3)=16, bzw. x(70.4) - y(70.3) = 31-16 = 15 und y(70.3)=16 ist ungleich y(70.4)=26. Die Gesamtsumme der Verschiebung Z berechnet sich aus der Nutziffer des Endes des Wicklungsstranges minus der Nutziffer des Endes des ersten Wicklungsteilstranges, wobei auch hier, wenn das Ergebnis negativ ist, das Ergebnis mod(m·p) genommen wird. In diesem Beispiel ist entsprechend Z(70)=(y(70)-y(70.1)) ·mod(m·p) = (26-56) ·mod(60) = 30. Es ist vorteilhaft, wenn Z größer oder gleich dem zweifachen der Strangzahl m, vorzugsweise größer oder gleich dem vierfachen der Strangzahl m ist. Die phasenbildenden Wicklungsstränge 71,72,73,74 weisen keinen unregelmäßigen Wicklungsabschnitt 91 auf. Dies zeigt sich entsprechend dadurch, das Z der Wicklungen Null ist: Z(71)=y(71)-y(71.1)=2-2=0; Z(72) = y(72)-y(72.1)=8-8=0; Z(73) = y(73)-y(73.1)=14-14=0; Z(74) = y(74)-y(74.1)=20-20=0.

Durch die unregelmäßigen Wicklungsabschnitte 91 lassen sich auch bei dieser Ausführung die Wicklungsanschlüsse fast beliebig auf dem Wickelkopf 45 oder 46 verteilen, wobei wiederum jede Nut 15 mit der gleichen Anzahl von in der Nut einliegenden Spulenseiten 92 befüllt ist. Hierdurch wird eine homogene Kraftanregung auf die Statorzähne 31 erreicht, die zu einem niedrigen Magnetgeräusch führt, wobei der Anfang und das Ende des unregelmäßigen Wicklungsabschnittes 91 im Wickelkopf 45, 46 gesichert sind, da die unregelmäßigen Abschnitte 91 in Spulenseiten 92 übergehen, die in der Nut einliegen.

Die phasenbildenden Wicklungsstränge 70, 71, 72, 73, 74 werden in der Ausführung gemäß Figur 7 wie folgt radial im Wickelkopf 45, 46 geschichtet: Der Wicklungsstrang 74 liegt radial außen. Hierauf werden radial nach Innen die wickelkopfbildenden Abschnitte der Wicklungsstränge 72, 70, 73, 71 gefügt. Dadurch werden die unregelmäßigen Abschnitte 91 zusätzlich zwischen den zu den Verschaltungspunkten 81, 82, 83 führenden Anfängen der Wicklungsstränge 71, 72, 73 und den Enden der Wicklungsstränge 72, 73, 74 gehalten. Die Anschlussdrähte sind an den Verschaltungspunkt 80, 81, 82, 83, 84 wiederum verdrillt und die unregelmäßigen Wicklungsabschnitte 91 können zusätzlich über Harz am Wickelkopf fixiert werden.

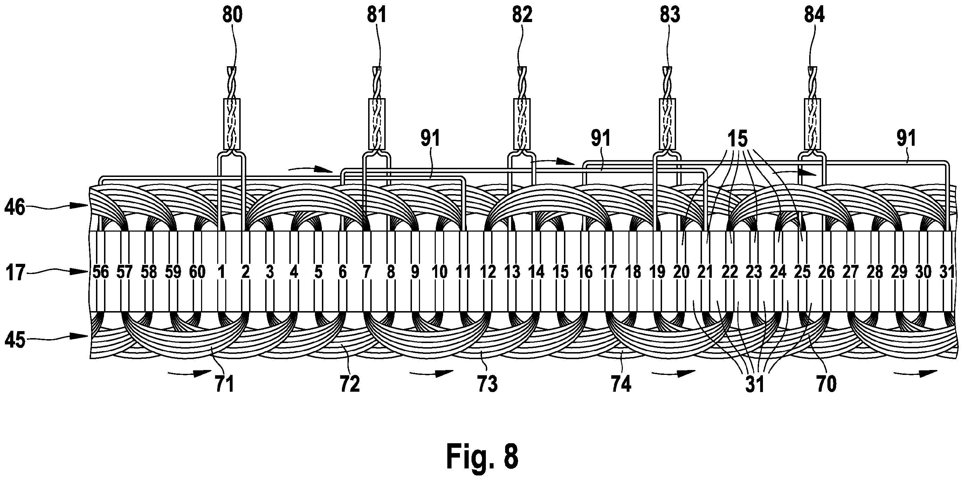

Figur 8 zeigt einen Ausschnitt des Stators 16, entsprechend dem Wickelschema in Fig. 7 aus einer Ansicht radial von innen. Die phasenbildenen Wicklungsstränge 70, 71, 72, 73, 74 der Statorwicklung 18 sind in die Nuten 15 des kreisringförmigen Blechpakets 17 eingelegt, welche jeweils durch Zähne 31 getrennt sind. Die Wicklungsstränge 70, 71, 72, 73, 74 sind im elektronikseitigen Wickelkopf 46 und im antriebsseitigen Wickelkopf 45 radial derart geschichtet, dass der Wicklungsstrang 74 außen liegt. Sein Wicklungsanfang liegt in Nut fünfundzwanzig und ist dort über den Verschaltungspunkt 84 mit dem Ende des Wicklungsstranges 70 verbunden. Das Ende des Wicklungsstranges 74 liegt in Nut zwanzig und ist über den Verschaltungspunkt 83 mit dem Anfang des Wicklungsstranges 73 verbunden. Der radial zweitäußerste Wicklungsstrang 72 liegt mit seinem Anfang in Nut dreizehn und ist über den Verschaltungspunkt 82 mit dem Ende des Wicklungsstranges 73 verbunden. Das Ende des phasenbildenden Wicklungsstranges 72 liegt in der Nut acht und ist über den Verschaltungspunkt 81 mit dem Anfang des Wicklungsstranges 71 verbunden. Der radial zweitinnerste Wicklungsstrang 73 liegt mit seinem Anfang in Nut neunzehn und ist über den Verschaltungspunkt 83 mit dem Ende des Wicklungsstranges 74 verbunden. Das Ende des Wicklungsstranges 73 liegt in der Nut vierzehn und ist über den Verschaltungspunkt 82 mit dem Anfang des phasenbildenden Wicklungsstranges 72 verbunden. Der radial innerste Wicklungsstrang 71 liegt mit seinem Anfang in Nut sieben und ist über den Verschaltungspunkt 81 mit dem Ende des phasenbildenden Wicklungsstranges 72 verbunden. Das Ende des Wicklungsstranges 71 liegt in der Nut zwei und ist über den Verschaltungspunkt 80 mit dem Anfang des Wicklungsstranges 70 verbunden.

Der radial mittlere Wicklungsstrang 70 liegt mit seinem Anfang in Nut eins und ist über den Verschaltungspunkt 80 mit dem Ende des Wicklungsstranges 71 verbunden. Das Ende des Wicklungsstranges 70 liegt in der Nut sechsundzwanzig und ist über den Verschaltungspunkt 84 mit dem Anfang des Wicklungsstranges 74 verbunden. Für die unregelmäßigen Wicklungsabschnitte 91 in dem phasenbildenden Wicklungsstrang 70 gilt, dass die Länge der durch sie bedingten Verschiebungen Z', d.h., dass die Nutziffer des Wicklungsanfanges des auf einen unregelmäßigen Wicklungsabschnitt folgenden Wicklungsteilstranges minus der Nutziffer des Wicklungsendes des vor dem unregelmäßigen Wicklungsabschnitt 91 liegenden Wicklungsteilstranges größer oder gleich der Phasenzahl m des Stators 16 ist und das Ende des vorhergehenden Wicklungsteilstranges y(70.1), y(70.2), y(70.3) ungleich dem Ende des nachfolgenden Wicklungsteilstranges y(70.2), y(70.3), y(70.4) ist. Ist die Länge der Verschiebung Z' durch den unregelmäßigen Abschnitt 91 negativ, so wird das Ergebnis mod(m·p) genommen. In diesem Beispiel ist die Länge der Verschiebung durch den unregelmäßigen Abschnitt x(70.2) - y(70.1)) mod(m·p) = 11-56 mod(m·p) = -45 mod(60)=15 und y(70.1)=56 ungleich y(70.2)=6, bzw. x(70.3) - y(70.2) = 21-6 = 15 und y(70.2)=6 ungleich y(70.3)=16, bzw. x(70.4) - y(70.3) = 31-16 = 15 und y(70.3)=16 ungleich y(70.4)=26. Die Gesamtsumme der Verschiebung Z berechnet sich aus der Nutziffer des Endes des Wicklungsstranges minus der Nutziffer des Endes des ersten Wicklungsteilstranges, wobei auch hier, wenn das Ergebnis negativ ist, das Ergebnis mod (m·p) genommen wird. In diesem Beispiel ist entsprechend Z(70)=(y(70)-y(70.1)) mod(m·p) = (26-56) mod(60) = 30. Es ist vorteilhaft, wenn Z größer oder gleich der doppelten Strangzahl m, vorzugsweise größer oder gleich dem vierfachen der Strangzahl m ist.

Die unregelmäßigen Wicklungsabschnitte 91 des Wicklungsstranges 70 werden an den Verschaltungspunkten 80, 81, 82, 83 und 84 durch die Anfänge bzw. Enden aller Wicklungsstränge 70, 71, 72, 73, 74 fixiert. Diese Fixierung kann wiederum durch Verdrillung der Wicklungsanfänge der Wicklungsstränge mit den Enden der Wicklungsstränge zumindest an den Verschaltungspunkten 81, 82, 83 verbessert werden. Wie bei der Anordnung gemäß Figur 4 ist es auch hier möglich, in einem weiteren Montageschritt Isolationshülsen über die verdrillten Enden bzw. Anfänge der Wicklungsstränge zu schieben, um die Isolation zwischen den unregelmäßigen Wicklungsabschnitten 91 und den Anfängen, bzw. Enden der Wicklungen zu verbessern. Dies erhöht zusätzlich auch den mechanischen Zusammenhalt.

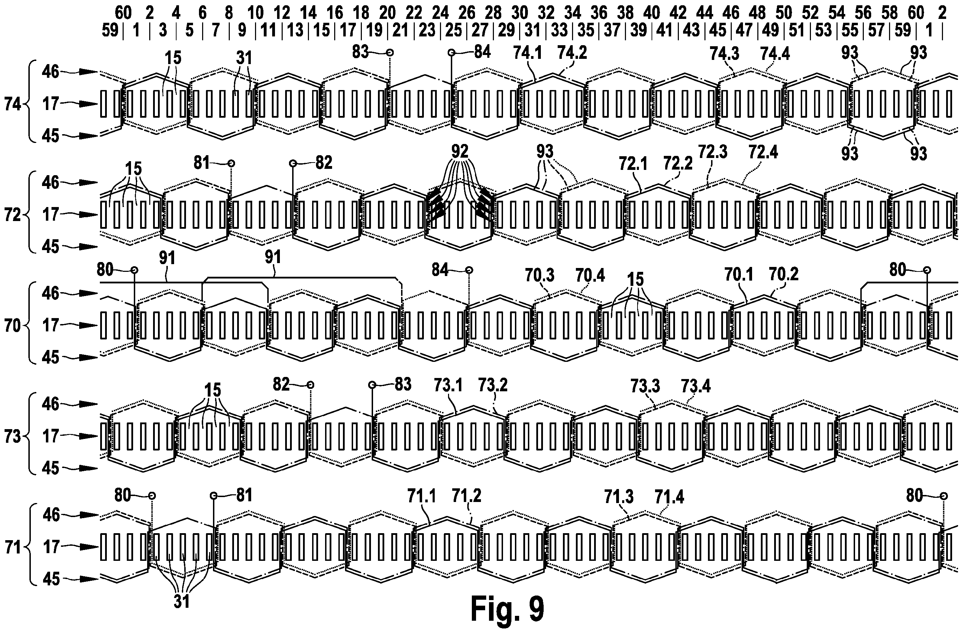

Figur 9 zeigt ein weiteres, erfindungsgemäß ausgeführtes Wickelschema mit einer verteilten Wellenwicklung. Eine verteilte Wellenwicklung ist entsprechend den Figuren 5 und 6 so aufgebaut, dass die Wicklungsabschnitte 93, die den Wickelkopf einer Statorseite bilden und jeweils aus einer Nut 15 austreten, sich in verschiedene Umfangsrichtungen erstrecken. Zur Veranschaulichung ist das kreisringförmige Blechpaket 17 in einer abgerollten Form vereinfacht durch Nuten 15 und Zähne 31 dargestellt. Für die Darstellung der Statorwicklung 18 des fünfphasigen Stators 16 ist vereinfacht jeder Wicklungsstrang 70, 71, 72, 73, 74 separat dargestellt.

Die Wicklungsstränge werden radial geschichtet in den Wickelköpfen 45, 46 angeordnet. Ein Beispiel für diese Schichtung ist im Wickelschema gezeichnet. Der Wicklungsstrang 74 liegt dabei radial außen. Hierauf werden radial nach Innen die Wicklungsabschnitte der Wicklungsstränge 72, 70, 73, 71 gefügt.

Jeder phasenbildende Wicklungsstrang 70, 71, 72, 73, 74 wird gebildet von vier Wicklungsteilsträngen 70.1, 70.2, 70.3, 70.4; 71.1, 71.2, 71.3, 71.4; 72.1, 72.2, 72.3, 72.4; 73.1, 73.2, 73.3, 73.4 und 74.1, 74.2, 74.3, 74.4. Die Wicklungsteilstränge werden gebildet durch p in Reihe geschaltete, in den Nuten 15 einliegende Spulenseiten 92, wobei p die Polzahl der Maschine ist. Die Spulenseiten 92 werden hierzu über die Wickelköpfe bildenden Abschnitte 93 verbunden.

Der Anfang eines Wicklungsteilstranges kommt aus der Nut x, von wo aus er sich über die Nuten (x+m(a-1))mod(p·m), bzw. (x-m(a-1))mod (p·m) erstreckt, wobei m die Anzahl der phasenbildenden Wicklungsstränge angibt und a eine natürliche Zahl zwischen 1 und der Polzahl p der elektrischen Maschine ist.

Für den ersten Wicklungsteilstrang 71.1 des Wicklungsstranges 71 ergibt sich daraus, dass sein Wicklungsanfang in Nut sieben liegt, also ist x des Wicklungsteilstrangs 71.1 gleich sieben, oder kurz x(71.1)=7. Von dort aus erstreckt sich der Wicklungsteilstrang 71.1 in die Nuten zwölf, siebzehn, zweiundzwanzig, siebenundzwanzig, zweiunddreißig, siebenunddreißig, zweiundvierzig, siebenundvierzig, zweiundfünfzig, siebenundfünfzig und zwei. Das Wicklungsende des Wicklungsteilstranges 71.1 liegt entsprechend in Nut zwei ein, also y(71.1)=2. Jeder Wicklungsteilstrang 70.1 bis 70.4, 71.1 bis 71.4, 72.1 bis 72.4, 73.1 bis 73.4 und 74.1 bis 74.4 wird gebildet durch p Spulenseiten 92, die in Nuten 15 einliegen. Der Wicklungsanfang des zweiten Wicklungsteilstranges 71.2 liegt in Nut sieben, also ist x(71.2)=7 und er ist direkt mit dem Wicklungsende des Wicklungsteilstranges 71.1 in Nut zwei verbunden. Von dort aus erstreckt sich der Wicklungsteilstrang 71.2 in die Nuten zwölf, siebzehn, zweiundzwanzig, siebenundzwanzig, zweiunddreißig, siebenunddreißig, zweiundvierzig, siebenundvierzig, zweiundfünfzig, siebenundfünfzig und zwei. Das Wicklungsende des Wicklungsteilstranges 71.2 liegt entsprechend in Nut zwei ein, also y(71.2)=2.

Der Wicklungssinn des dritten Wicklungsteilstrangs 71.3 ist gegenüber dem ersten und zweiten Wicklungsteilstrang 71.1, 71.2 umgekehrt. Der Wicklungsanfang des dritten Wicklungsteilstranges 71.3 liegt in Nut siebenundfünfzig, also ist x(71.3)=57 und er ist direkt mit dem Wicklungsende des Wicklungsteilstranges 71.2 in Nut zwei verbunden. Von dort aus erstreckt sich der Wicklungsteilstrang 71.3 in die Nuten zweiundfünfzig, siebenundvierzig, zweiundvierzig, siebenunddreißig, zweiunddreißig, siebenundzwanzig, zweiundzwanzig, siebzehn, zwölf, sieben und zwei. Das Wicklungsende des Wicklungsteilstranges 71.3 liegt entsprechend in Nut zwei ein, also y(71.3)=2.

Der Wicklungssinn des vierten Wicklungsteilstrang 71.4 ist gegenüber dem ersten und zweiten Wicklungsteilstrang 71.1 und 71.2 ebenfalls umgekehrt und ist gleichlaufend mit dem dritten Wicklungsteilstrang 71.3. Der Wicklungsanfang des vierten Wicklungsteilstranges 71.4 liegt in Nut siebenundfünfzig, also ist x(71.4)=57 und er ist direkt mit dem Wicklungsende des Wicklungsteilstranges 71.3 in Nut zwei verbunden. Von dort aus erstreckt sich der Wicklungsteilstrang 71.4 in die Nuten zweiundfünfzig, siebenundvierzig, zweiundvierzig, siebenunddreißig, zweiunddreißig, siebenundzwanzig, zweiundzwanzig, siebzehn, zwölf, sieben und zwei. Das Wicklungsende des Wicklungsteilstranges 71.4 liegt entsprechend in Nut zwei ein, also y(71.4)=2. Das Wicklungsende des Wicklungsteilstranges 71.4 bildet gleichzeitig das Wicklungsende des Wicklungsstranges 71, also y(71.4)=y(71)=2 und wird auf den Verschaltungspunkt 80 geführt. Der Anfang des Wicklungsteilstranges 71.1 bildet gleichzeitig den Anfang des Wicklungsstranges 71, also x(71.1)=x(71)=7 und wird auf den Verschaltungspunkt 81 geführt.

Für den ersten Wicklungsteilstrang 72.1 des Wicklungsstranges 72 ergibt sich daraus, dass sein Wicklungsanfang in Nut dreizehn liegt, also ist x(72.1) =13. Von dort aus erstreckt sich der Wicklungsteilstrang 72.1 in die Nuten achtzehn, dreiundzwanzig, achtundzwanzig, dreiunddreißig, achtunddreißig, dreiundvierzig, achtundvierzig, dreiundfünfzig, achtundfünfzig, drei und acht. Das Wicklungsende des Wicklungsteilstranges 72.1 liegt entsprechend in Nut acht ein, also y(72.1)=8. Der Wicklungsanfang des zweiten Wicklungsteilstranges 72.2 liegt in Nut dreizehn, also ist x(72.2)=13 und er ist direkt mit dem Wicklungsende des Wicklungsteilstranges 72.1 in Nut acht verbunden. Von dort aus erstreckt sich der Wicklungsteilstrang 72.2 in die Nuten achtzehn, dreiundzwanzig, achtundzwanzig, dreiunddreißig, achtunddreißig, dreiundvierzig, achtundvierzig, dreiundfünfzig, achtundfünfzig, drei und acht. Das Wicklungsende des Wicklungsteilstranges 72.2 liegt entsprechend in Nut acht ein, also y(72.2)=8.

Der Wicklungssinn des dritten Wicklungsteilstranges 72.3 ist gegenüber dem ersten und zweiten Wicklungsteilstrang 72.1 und 72.2 umgekehrt. Der Wicklungsanfang des dritten Wicklungsteilstranges 72.3 liegt in Nut drei, also ist x(72.3)=3 und er ist direkt mit dem Wicklungsende des Wicklungsteilstranges 72.2 in Nut acht verbunden. Von dort aus erstreckt sich der Wicklungsteilstrang 72.3 in die Nuten achtundfünfzig, dreiundfünfzig, achtundvierzig, dreiundvierzig, achtunddreißig, dreiunddreißig, achtundzwanzig, dreiundzwanzig, achtzehn, dreizehn und acht. Das Wicklungsende des Wicklungsteilstranges 72.3 liegt entsprechend in Nut acht ein, also y(72.3)=8.

Der Wicklungssinn des vierten Wicklungsteilstrang 72.4 ist gegenüber dem ersten und zweiten Wicklungsteilstrang 72.1, 72.2 umgekehrt und ist gleichlaufend mit dem dritten Wicklungsteilstrang 72.3. Der Wicklungsanfang des vierten Wicklungsteilstranges 72.4 liegt in Nut drei, also ist x(72.4)=3 und er ist direkt mit dem Wicklungsende des Wicklungsteilstranges 72.3 in Nut acht verbunden. Von dort aus erstreckt sich der Wicklungsteilstrang 72.4 in die Nuten achtundfünfzig, dreiundfünfzig, achtundvierzig, dreiundvierzig, achtunddreißig, dreiunddreißig, achtundzwanzig, dreiundzwanzig, achtzehn, dreizehn und acht. Das Wicklungsende des Wicklungsteilstranges 72.4 liegt entsprechend in Nut acht ein, also y(72.4)=8. Das Wicklungsende des Wicklungsteilstranges 72.4 bildet gleichzeitig das Wicklungsende des phasenbildenden Wicklungsstranges 72, also y(72.4)=y(72)=8 und wird auf den Verschaltungspunkt 81 geführt. Der Anfang des Wicklungsteilstranges 72.1 bildet gleichzeitig den Anfang des phasenbildenden Wicklungsstranges 72, also ist x(72.1)=x(72)=13 und wird auf den Verschaltungspunkt 82 geführt.

Für den ersten Wicklungsteilstrang 73.1 des Wicklungsstranges 73 ergibt sich daraus, dass sein Wicklungsanfang in Nut neunzehn, also ist x(73.1)=19. Von dort aus erstreckt sich der Wicklungsteilstrang 73.1 in die Nuten vierundzwanzig, neunundzwanzig, vierunddreißig, neununddreißig, vierundvierzig, neunundvierzig, vierundfünfzig, neunundfünfzig, vier, neun und vierzehn. Das Wicklungsende des Wicklungsteilstranges 73.1 liegt entsprechend in Nut vierzehn ein, also y(73.1)=14. Der Wicklungsanfang des zweiten Wicklungsteilstranges 73.2 liegt in Nut neunzehn, also ist x(73.2)=19 und ist direkt mit dem Wicklungsende des Wicklungsteilstranges 73.1 in Nut vierzehn verbunden. Von dort aus erstreckt sich der Wicklungsteilstrang 73.2 in die Nuten vierundzwanzig, neunundzwanzig, vierunddreißig, neununddreißig, vierundvierzig, neunundvierzig, vierundfünfzig, neunundfünfzig, vier, neun und vierzehn. Das Wicklungsende des Wicklungsteilstranges 73.2 liegt entsprechend in Nut vierzehn ein, also y(73.2)=14.

Der Wicklungssinn des dritten Wicklungsteilstrang 73.3 ist gegenüber dem ersten und zweiten Wicklungsteilstrang 73.1 und 73.2 umgekehrt. Der Wicklungsanfang des dritten Wicklungsteilstranges 73.3 liegt in Nut neun, also ist x(73.3)=9 und ist direkt mit dem Wicklungsende des Wicklungsteilstranges 73.2 in Nut vierzehn verbunden. Von dort aus erstreckt sich der Wicklungsteilstrang 73.3 in die Nuten vier, neunundfünfzig, vierundfünfzig, neunundvierzig, vierundvierzig, neununddreißig, vierunddreißig, neunundzwanzig, vierundzwanzig, neunzehn und vierzehn. Das Wicklungsende des Wicklungsteilstranges 73.3 liegt entsprechend in Nut vierzehn ein, also y(73.3)=14.

Der Wicklungssinn des vierten Wicklungsteilstrang 73.4 ist ebenfalls gegenüber dem ersten und zweiten Wicklungsteilstrang 73.1, 73.2 umgekehrt und ist gleichlaufend mit dem dritten Wicklungsteilstrang 73.3. Der Wicklungsanfang des vierten Wicklungsteilstranges 73.4 liegt in Nut neun, also ist x(73.4)=9 und ist direkt mit dem Wicklungsende des Wicklungsteilstranges 73.3 in Nut vierzehn verbunden. Von dort aus erstreckt sich der Wicklungsteilstrang 73.4 in die Nuten vier, neunundfünfzig, vierundfünfzig, neunundvierzig, vierundvierzig, neununddreißig, vierunddreißig, neunundzwanzig, vierundzwanzig, neunzehn und vierzehn. Das Wicklungsende des Wicklungsteilstranges 73.4 liegt entsprechend in Nut vierzehn ein, also y(73.4)=14. Das Wicklungsende des Wicklungsteilstranges 73.4 bildet gleichzeitig das Wicklungsende des phasenbildenden Wicklungsstranges 73, also y(73.4)=y(73)=14 und wird auf den Verschaltungspunkt 82 geführt. Der Anfang des Wicklungsteilstranges 73.1 bildet gleichzeitig den Anfang des phasenbildenden Wicklungsstranges 73, also x(73.1)=x(73)=19 und wird auf den Verschaltungspunkt 83 geführt.

Für den ersten Wicklungsteilstrang 74.1 des Wicklungsstranges 74 ergibt sich daraus, dass der Wicklungsanfang des ersten Wicklungsteilstranges 74.1 in Nut fünfundzwanzig liegt, also ist x(74.1)=25. Von dort aus erstreckt sich der Wicklungsteilstrang 74.1 in die Nuten dreißig, fünfunddreißig, vierzig, fünfundvierzig, fünfzig, fünfundfünfzig, sechzig, fünf, zehn, fünfzehn und zwanzig. Das Wicklungsende des Wicklungsteilstranges 74.1 liegt entsprechend in Nut zwanzig ein, also y(74.1)=20. Der Wicklungsanfang des zweiten Wicklungsteilstranges 74.2 liegt in Nut fünfundzwanzig, also ist x(74.2)=25 und ist direkt mit dem Wicklungsende des Wicklungsteilstranges 74.1 in Nut zwanzig verbunden. Von dort aus erstreckt sich der Wicklungsteilstrang 74.2 in die Nuten dreißig, fünfunddreißig, vierzig, fünfundvierzig, fünfzig, fünfundfünfzig, sechzig, fünf, zehn, fünfzehn und zwanzig. Das Wicklungsende des Wicklungsteilstranges 74.2 liegt entsprechend in Nut zwanzig ein, also y(74.2)=20.

Der Wicklungssinn des dritten Wicklungsteilstrang 74.3 ist gegenüber dem ersten und zweiten Wicklungsteilstrang 74.1, 74.2 umgekehrt. Der Wicklungsanfang des dritten Wicklungsteilstranges 74.3 liegt in Nut fünfzehn, also ist x(74.3)=15 und ist direkt mit dem Wicklungsende des Wicklungsteilstranges 74.2 in Nut zwanzig verbunden. Von dort aus erstreckt sich der Wicklungsteilstrang 74.3 in die Nuten zehn, fünf, sechzig, fünfundfünfzig, fünfzig, fünfundvierzig, vierzig, fünfunddreißig, dreißig, fünfundzwanzig und zwanzig. Das Wicklungsende des Wicklungsteilstranges 74.3 liegt entsprechend in Nut zwanzig ein, also y(74.3)=20.

Der Wicklungssinn des vierten Wicklungsteilstranges 74.4 ist ebenfalls gegenüber dem ersten und zweiten Wicklungsteilstrang 74.1, 74.2 umgekehrt und ist gleichlaufend mit dem dritten Wicklungsteilstrang 74.3. Der Wicklungsanfang des vierten Wicklungsteilstranges 74.4 liegt in Nut fünfzehn, also ist x(74.4)=15 und ist direkt mit dem Wicklungsende des Wicklungsteilstranges 74.3 in Nut zwanzig verbunden. Von dort aus erstreckt sich der Wicklungsteilstrang 74.4 in die Nuten zehn, fünf, sechzig, fünfundfünfzig, fünfzig, fünfundvierzig, vierzig, fünfunddreißig, dreißig, fünfundzwanzig und zwanzig. Das Wicklungsende des Wicklungsteilstranges 74.4 liegt entsprechend in Nut zwanzig ein, also y(74.4)=20. Das Wicklungsende des Wicklungsteilstranges 74.4 bildet gleichzeitig das Wicklungsende des Wicklungsstranges 74, also y(74.4)=y(74)=20 und wird auf den Verschaltungspunkt 83 geführt. Der Anfang des Wicklungsteilstranges 74.1 bildet gleichzeitig den Anfang des phasenbildenden Wicklungsstranges 74, also x(74.1)=x(74)=25 und wird auf den Verschaltungspunkt 84 geführt.

Für den ersten Wicklungsteilstrang 70.1 des Wicklungsstranges 70 ergibt sich daraus, dass sein Wicklungsanfang in Nut eins liegt, also ist x(70.1)=1. Von dort aus erstreckt sich der Wicklungsteilstrang 70.1 in die Nuten sechs, elf, sechzehn, einundzwanzig, sechsundzwanzig, einunddreißig, sechsunddreißig, einundvierzig, sechsundvierzig, einundfünfzig und sechsundfünfzig. Das Wicklungsende des Wicklungsteilstranges 70.1 liegt entsprechend in Nut sechsundfünfzig ein, also y(70.1)=56.

Der Wicklungsanfang des zweiten Wicklungsteilstranges 70.2 liegt in Nut elf, also ist x(70.2)=11. Er ist mit dem Wicklungsende des Wicklungsteilstranges 70.1 in Nut sechsundfünfzig über einen unregelmäßigen Wicklungsabschnitt 91 verbunden. Von dort aus erstreckt sich der Wicklungsteilstrang 70.2 in die Nuten sechzehn, einundzwanzig, sechsundzwanzig, einunddreißig, sechsunddreißig, einundvierzig, sechsundvierzig, einundfünfzig, sechsundfünfzig, eins und sechs. Das Wicklungsende des Wicklungsteilstranges 70.2 liegt entsprechend in Nut sechs ein, also y(70.2)=6.

Der Wicklungssinn des dritten Wicklungsteilstrang 70.3 ist gegenüber dem ersten und zweiten Wicklungsteilstrang 70.1 und 70.2 umgekehrt. Der Wicklungsanfang des dritten Wicklungsteilstranges 70.3 liegt in Nut einundzwanzig, also ist x(70.3)=21 und ist mit dem Wicklungsende des Wicklungsteilstranges 70.2 in Nut sechs über einen unregelmäßigen Wicklungsabschnitt 91 verbunden. Von dort aus erstreckt sich der Wicklungsteilstrang 70.3 in die Nuten sechzehn, elf, sechs, eins, sechsundfünfzig, einundfünfzig, sechsundvierzig, einundvierzig, sechsunddreißig, einunddreißig und sechsundzwanzig. Das Wicklungsende des Wicklungsteilstranges 70.3 liegt entsprechend in Nut sechsundzwanzig ein, also y(70.3)=26.

Der Wicklungssinn des vierten Wicklungsteilstranges 70.4 ist ebenfalls gegenüber dem ersten und zweiten Wicklungsteilstrang 70.1 und 70.2 umgekehrt und ist gleichlaufend mit dem dritten Wicklungsteilstrang 70.3. Der Wicklungsanfang des vierten Wicklungsteilstranges 70.4 liegt in Nut einundzwanzig, also ist x(70.4)=21 und ist direkt mit dem Wicklungsende des Wicklungsteilstranges 70.3 in Nut sechsundzwanzig verbunden. Von dort aus erstreckt sich der Wicklungsteilstrang 70.4 in die Nuten sechzehn, elf, sechs, eins, sechsundfünfzig, einundfünfzig, sechsundvierzig, einundvierzig, sechsunddreißig, einunddreißig und sechsundzwanzig. Das Wicklungsende des Wicklungsteilstranges 70.4 liegt entsprechend in Nut sechsundzwanzig ein, also y(70.4)=26. Das Wicklungsende des Wicklungsteilstranges 70.4 bildet gleichzeitig das Wicklungsende des phasenbildenden Wicklungsstranges 70, also y(70.4)=y(70)=26 und wird auf den Verschaltungspunkt 84 geführt. Der Anfang des Wicklungsteilstranges 70.1 bildet gleichzeitig den Anfang des phasenbildenden Wicklungsstranges 70, also x(70.1)=x(70)=1 und wird auf den Verschaltungspunkt 80 geführt.

Die unregelmäßigen Wicklungsabschnitte 91 sind so bemessen, dass die Länge des Verschiebung Z' der Teilwicklungen, d.h. die Nutziffer des Wicklungsanfanges des auf den unregelmäßigen Wicklungsabschnitt folgenden Wicklungsteilstranges minus der Nutziffer des Wicklungsendes des vor dem unregelmäßigen Wicklungsabschnitt liegenden Wicklungsteilstranges größer oder gleich der Phasenzahl m des Stators 16 ist und das Ende des vorhergehenden Wicklungsteilstranges y(70.1),y(70.2) ungleich dem Ende des nachfolgenden Wicklungsteilstranges y(70.2),y(70.3) ist. Ist die Länge der Verschiebung durch den unregelmäßigen Abschnitt negativ, so wird das Ergebnis mod(m·p) genommen. In diesem Beispiel ist die Länge der Verschiebung durch den unregelmäßigen Abschnitt (x(70.2) - y(70.1))mod(m·p) = 11-56 mod(m·p) = -45 mod(60)=15 und y(70.1)=56 ungleich y(70.2)=6, bzw. x(70.3) - y(70.2) = 21-6 = 15 und y(70.2)=6 ungleich y(70.3)=26.

Die Gesamtsumme der Verschiebung Z berechnet sich aus der Nutziffer des Endes des Wicklungsstranges minus der Nutziffer des Endes des ersten Wicklungsteilstranges, wobei auch hier, wenn das Ergebnis negativ ist, das Ergebnis mod (m·p) genommen wird. In diesem Beispiel ist entsprechend Z(70)=(y(70)-y(70.1))mod(m·p) = (26-56)mod(60) = 30. Es ist vorteilhaft, wenn Z größer oder gleich der doppelten Strangzahl m, vorzugsweise größer oder gleich dem vierfachen der Strangzahl m ist.

Die unregelmäßigen Wicklungsabschnitte 91 des Wicklungsstranges 70 werden an den Verschaltungspunkten 80, 81, 82, 83 und 84 durch die Anfänge bzw. Enden der phasenbildenden Wicklungsstränge 70, 71, 72, 73, 74 fixiert. Diese Fixierung kann durch Verdrillung der Wicklungsanfänge der Wicklungsstränge mit den Enden der Wicklungsstränge an den Verschaltungspunkten 81, 82, 83 verbessert werden. In einem weiteren Montageschritt können Isolationshülsen über die verdrillten Enden bzw. Anfänge der Wicklungsstränge gezogen werden, um die Isolation zwischen den unregelmäßigen Wicklungsabschnitten und den Anfängen, bzw. Enden der Wicklungen zu verbessern. Dies erhöht zusätzlich den mechanischen Zusammenhalt.

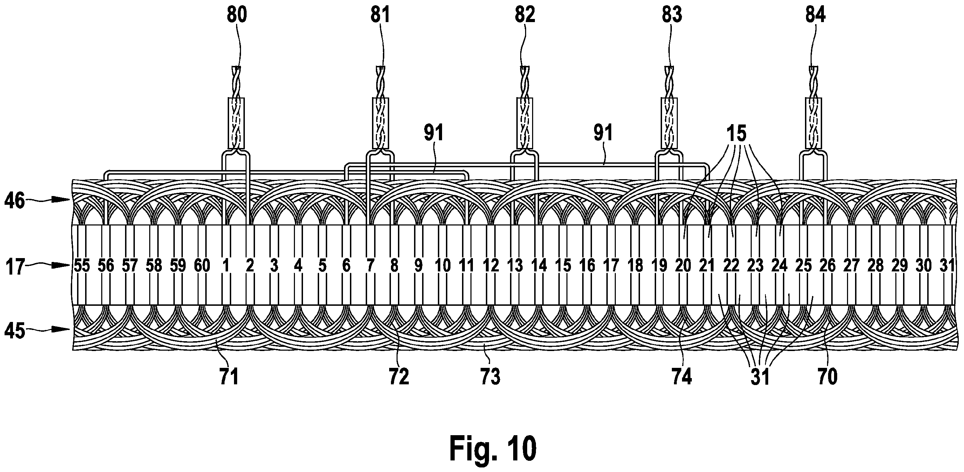

Figur 10 zeigt einen Ausschnitt des Stators 16 entsprechend dem Wickelschema in Fig. 9 aus einer Ansicht radial von innen. Die phasenbildenen Wicklungsstränge 70, 71, 72, 73, 74 der Statorwicklung 18 sind in den Nuten 15 des kreisringförmigen Blechpakets 17 eingelegt, welche jeweils durch Zähne 31 getrennt sind. Die Wicklungsstränge 70, 71, 72, 73, 74 liegen im elektronikseitigen Wickelkopf 46 und im antriebsseitigen Wickelkopf 45 radial derart geschichtet, dass der Wicklungsstrang 74 außen liegt. Sein Wicklungsanfang liegt in Nut fünfundzwanzig und ist dort über den Verschaltungspunkt 84 mit dem Ende des Wicklungsstranges 70 verbunden. Das Ende des Wicklungsstranges 74 liegt in Nut zwanzig und ist über den Verschaltungspunkt 83 mit dem Anfang des Wicklungsstranges 73 verbunden. Der radial zweitäußerste Wicklungsstrang 72 liegt mit seinem Anfang in Nut dreizehn und ist dort über den Verschaltungspunkt 82 mit dem Ende des Wicklungsstranges 73 verbunden. Das Ende des Wicklungsstranges 72 liegt in der Nut acht und ist über den Verschaltungspunkt 81 mit dem Anfang des Wicklungsstranges 71 verbunden. Der radial zweitinnerste Wicklungsstrang 73 liegt mit seinem Anfang in Nut neunzehn und ist über den Verschaltungspunkt 83 mit dem Ende des Wicklungsstranges 74 verbunden. Das Ende des Wicklungsstranges 73 liegt in der Nut vierzehn und ist über den Verschaltungspunkt 82 mit dem Anfang des Wicklungsstranges 72 verbunden. Der radial innerste Wicklungsstrang 71 liegt mit seinem Anfang in Nut sieben und ist über den Verschaltungspunkt 81 mit dem Ende des Wicklungsstranges 72 verbunden. Das Ende des Wicklungsstranges 71 liegt in der Nut zwei und ist über den Verschaltungspunkt 80 mit dem Anfang des Wicklungsstranges 70 verbunden.

Der radial mittlere Wicklungsstrang 70 liegt mit seinem Anfang in Nut eins und ist über den Verschaltungspunkt 80 mit dem Ende des Wicklungsstranges 71 verbunden. Das Ende des Wicklungsstranges 70 liegt in der Nut sechsundzwanzig und ist über den Verschaltungspunkt 84 mit dem Anfang des Wicklungsstranges 74 verbunden.

Die unregelmäßigen Wicklungsabschnitte 91 im Wicklungsstrang 70 sind so bemessen, dass die Nutziffer des Wicklungsanfanges des nachfolgenden Wicklungsteilstranges minus der Nutziffer des Wicklungsendes des vor dem unregelmäßigen Wicklungsabschnitt 91 liegenden Wicklungsteilstranges größer oder gleich der Phasenzahl m des Stators 16 ist und das Ende des vorhergehenden Wicklungsteilstranges ungleich dem Ende des nachfolgenden Wicklungsteilstranges ist.

Die Gesamtverschiebung Z berechnet sich aus der Nutziffer des Endes des Wicklungsstranges minus der Nutziffer des Endes des ersten Wicklungsteilstranges, wobei auch hier, wenn das Ergebnis negativ ist, das Ergebnis mod(m·p) genommen wird. In diesem Beispiel ist entsprechend Z(70)=(y(70)-y(70.1)) mod(m·p) = (26-56) mod(60) = 30. Es ist vorteilhaft, wenn Z größer oder gleich der doppelten Strangzahl m, vorzugsweise größer oder gleich dem vierfachen der Strangzahl m ist.

Die unregelmäßigen Wicklungsabschnitte 91 des Wicklungsstranges 70 werden an den Verschaltungspunkten 80, 81, 82, 83 und 84 durch die Anfänge bzw. Enden aller Wicklungsstränge 70, 71, 72, 73, 74 fixiert. Diese Fixierung kann wiederum durch Verdrillung der Wicklungsanfänge der Wicklungsstränge mit den Enden der Wicklungsstränge zumindest an den Verschaltungspunkten 81, 82, 83 verbessert werden. Wie bei den vorhergehenden Anordnungen ist es auch hier möglich, in einem weiteren Montageschritt Isolationshülsen über die verdrillten Enden bzw. Anfänge der Wicklungsstränge zu schieben, um die Isolation zwischen den unregelmäßigen Wicklungsabschnitten 91 und den Anfängen, bzw. Enden der Wicklungen zu verbessern. Dies erhöht zusätzlich den mechanischen Zusammenhalt.

Wird eine erfindungsgemäße Statorwicklung 18 als verteilte Wellenwicklung hergestellt, so ist es vorteilhaft, wenn die Anzahl der Wicklungsteilstränge 70.3, 70.4; 71.3, 71.4; 72.3, 72.4; 73.3, 73.4 und 74.3, 74.4 eines Wicklungsstranges 70 bis 74, die einen umgekehrten Wicklungssinn aufweisen, um nicht mehr als zwei von der Anzahl der Wicklungsteilstränge 70.1, 70.2; 71.1, 71.2; 72.1, 72.2; 73.1, 73.2 und 74.1, 74.2 mit normalem Wicklungssinn abweichen.

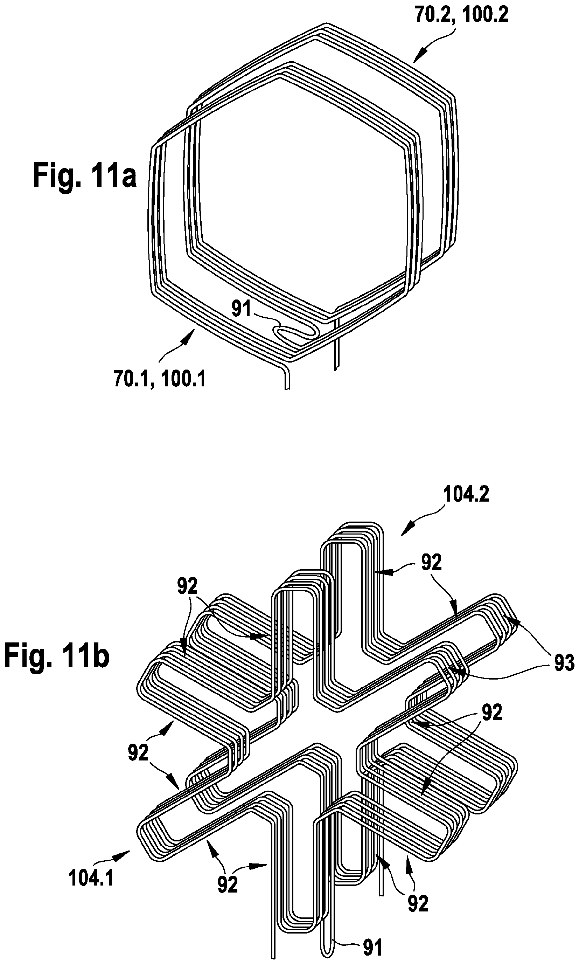

Die Figuren 11a bis 11c zeigen schematisierte Darstellungen der Ausführungsstadien bei der Herstellung einer erfindungsgemäßen sternförmigen Wicklungseinheit 70 mit zwei gegeneinander verdrehten Teilwicklungen 70.1 und 70.2 und einem die Teilwicklungen verbindenden unregelmäßigen Wicklungsabschnitt 91. Hierbei werden zunächst zwei über einen den unregelmäßigen Wicklungsabschnitt 91 bildenden Drahtabschnitt verbundene Wicklungsteilstränge 70.1 und 70.2 gewickelt, welche anschließend um eine der Drahtlänge des unregelmäßigen Wicklungsabschnittes 91 entsprechenden Winkel gegeneinander verdreht werden. Die Wicklungsteilstränge 70.1 und 70.2 sind hierbei zunächst als ebene Vorstufe 100.1, 100.2 im Wesentlichen kreisförmig oder als Vieleck gewickelt.

Figur 11b zeigt ein Fertigungsstadium mit den beiden sternförmig verformten Vorstufen 104.1 und 104.2 der Wicklungsteilstränge 70.1 und 70.2, welche durch den noch losen, unregelmäßigen Wicklungsabschnitt 91 verbunden sind.

Aus Figur 11b sind weiterhin bereits die später die Spulenseiten 92 sowie die später die Wickelköpfe 45,46 bildenden Wicklungsabschnitte 93 der Teilstränge 70.1 und 70.2 zu erkennen.

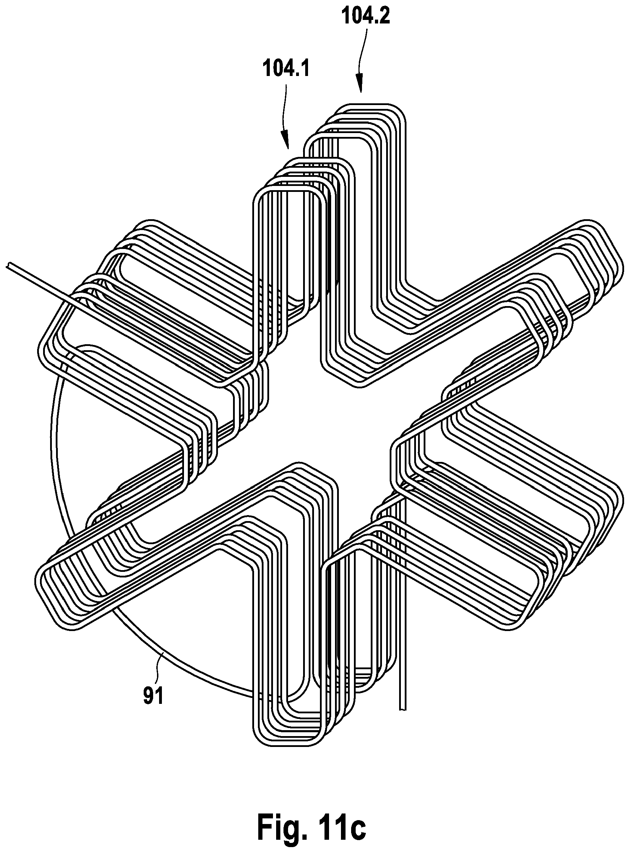

Figur 11c zeigt die im nächsten Fertigungsschritt um drei Polteilungen p gegeneinander verdrehten Teilstränge 70.1 und 70.2 in der Form der Zwischenstufen 104.1 und 104.2. Der den unregelmäßigen Wicklungsabschnitt 91 bildende Drahtabschnitt liegt jetzt gestreckt auf Höhe der die späteren Wickelköpfe bildenden Wicklungsabschnitte 104.1 und 104.2. Weitere Veränderungen sind in der Fertigungsstufe gemäß Figur 11c noch nicht durchgeführt.

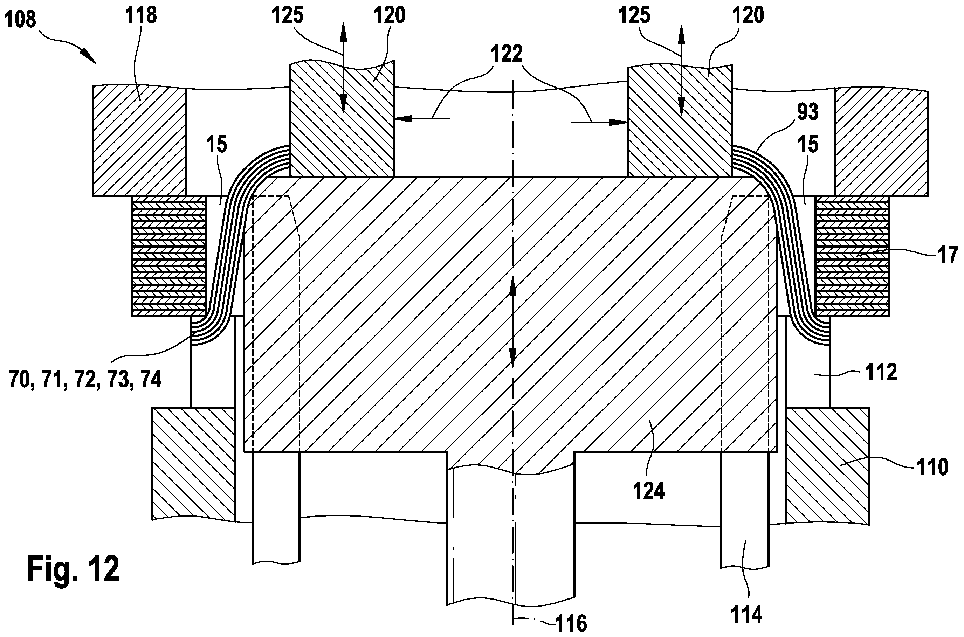

Figur 12 zeigt eine Vorrichtung 108, mit deren Hilfe die Wicklungsstränge 70 bis 74 mit oder ohne unregelmäßigen Wicklungsabschnitt 91 entsprechend Figur 11 in ein kreisringförmiges Blechpaket 17 des Stators 16 eingebracht werden. Die Vorrichtung 108 enthält ein Einzugswerkzeug 110 mit einem Einziehstempel 124 und einer Aufnahmekrone 112 für eine entsprechend Figur 11 sternförmig vorgeformte Strangwicklung, welche dann durch eine sogenannte Einziehnadel 114 in Achsrichtung 116 des Stators 16 in Nuten 15 eingezogen wird. Das Statorblechpaket 17 ist eingespannt zwischen der Aufnahmekrone 112 am Einzugswerkzeug 110 und einem Spannring 118, wobei die Wickelköpfe auf der der Aufnahmekrone 112 gegenüber liegenden Seite der Vorrichtung 108 durch sogenannte Nachdrückbacken 120 geformt werden, welche radial entsprechend den Pfeilen 122 verschiebbar und in Richtung der Pfeile 125 aus der Vorrichtung 108 nach Abschluss der Form der Wicklung ausfahrbar sind. Auf diese Weise werden die gemäß Figur 11 vorgeformten Wicklungsteilstränge nacheinander axial in die Nuten 15 des kreisringsförmigen Statorblechpaketes eingezogen und dabei in den Nuten 15 und in Wickelköpfen 45, 46 radial geschichtet.

## Patentansprüche

1. Elektrische Maschine, insbesondere elektrisch erregter Klauenpolgenerator für Kraftfahrzeuge, mit einem Stator (16), dessen Wicklung (18) fünfsträngig ausgebildet und mit ihren Stranganschlüssen (80-84) mit einer Gleichrichteranordnung (69) oder einer Pulswechselrichteranordnung verbunden ist, **dadurch gekennzeichnet, dass** der Wicklungsanfang (x) und das Wicklungsende (y) wenigstens eines Wicklungsstrangs (70-74) mehr als fünf Nuten (15) auseinander liegen und jede Nut (15) dieses Strangs (70-74) die gleiche Anzahl von Spulenseiten (92) aufweist.

2. Elektrische Maschine nach Anspruch 1, **dadurch gekennzeichnet, dass** wenigstens ein Wicklungsstrang (70-74 mindestens zwei Wicklungsteilstränge (70.1,70.2 usw.) aufweist, die durch mindestens einen unregelmäßigen Wicklungsabschnitt (91) verbunden sind.

3. Elektrische Maschine nach Anspruch 1 oder 2, **dadurch gekennzeichnet, dass** wenigstens ein Wicklungsstrang (70-74) mehr als zwei Wicklungsteilstränge (70.1,70.2 usw.) aufweist, die durch wenigstens zwei unregelmäßige Wicklungsabschnitte (91) verbunden sind.

4. Elektrische Maschine nach einem der vorhergehenden Ansprüche, **dadurch gekennzeichnet, dass** von den fünf Wicklungssträngen (70-74) nur einer einen unregelmäßigen Wicklungsabschnitt (91) aufweist.

5. Elektrische Maschine nach einem der vorhergehenden Ansprüche, **dadurch gekennzeichnet, dass** die unregelmäßigen Wicklungsabschnitte (91) auf dem gleichen Wickelkopf (46) wie die Anschlüsse (80-84) der Wicklungsstränge (70-74) angeordnet und durch die Anschlüsse auf dem Wickelkopf (46) fixiert sind.

6. Elektrische Maschine nach Anspruch 5, **dadurch gekennzeichnet, dass** die unregelmäßigen Wicklungsabschnitte (91) zumindest teilweise durch verdrillte Endabschnitte der Anschlüsse (80-84) der Wicklungsstränge (70-74) auf dem Wickelkopf (46) fixiert sind.

7. Elektrische Maschine nach einem der vorhergehenden Ansprüche, **dadurch gekennzeichnet, dass** sich die unregelmäßigen Wicklungsabschnitte (91) zwischen zwei Wicklungsteilsträngen (70.1,70.2 usw.)über eine wenigstens der zweifachen, vorzugsweise über eine der vierfachen Phasenzahl (m) entsprechende Anzahl von Nuten (15) erstrecken.

8. Elektrische Maschine nach einem der vorhergehenden Ansprüche, **dadurch gekennzeichnet, dass** in jeder Nut (15) des Stators (16) die gleiche Anzahl von Spulenseiten (92) liegt.

9. Elektrische Maschine nach einem der vorhergehenden Ansprüche, **dadurch gekennzeichnet**, das alle Wicklungsteilstränge (70.1,70.2 usw.) eines Wicklungsstranges (70-74) aus durchgehendem Draht gewickelt sind.

10. Elektrische Maschine nach einem der vorhergehenden Ansprüche, **dadurch gekennzeichnet, dass** die Wicklungsstränge (70-74) als verteilte Wellenwicklung ausgebildet sind.

11. Elektrische Maschine nach einem der vorhergehenden Ansprüche, **dadurch gekennzeichnet, dass** die Wicklungsstränge (70-74) in den Wickelköpfen (45,46) radial geschichtet sind.

12. Elektrische Maschine nach Anspruch 11, **dadurch gekennzeichnet, dass** der oder die Wicklungsstränge (70) mit einem oder mehreren unregelmäßigen Wicklungsabschnitten (91) radial zwischen Wicklungssträngen (71-74) ohne unregelmäßige Wicklungsabschnitte (91) angeordnet ist/sind.

13. Elektrische Maschine nach einem der vorhergehenden Ansprüche, **dadurch gekennzeichnet, dass** die miteinander zu verschaltenden Anschlüsse (80-84) der Wicklungsstränge (70-74) aus direkt benachbarten Nuten (15) austreten.

14. Elektrische Maschine nach einem der vorhergehenden Ansprüche, **dadurch gekennzeichnet, dass** am Statorumfang zwischen zwei benachbarten Nuten (15) mit Anschlüssen (80-84) der Wicklungsstränge (70-74) jeweils vier Nuten (15) ohne Stranganschlüsse liegen.

15. Elektrische Maschine nach einem der vorhergehenden Ansprüche, **dadurch gekennzeichnet, dass** die Ständerwicklung (16) als fünfzackiger Stern (Pentagramm, Fünfeck mit fünf Kreuzungen) verschaltet ist.

16. Verfahren zur Herstellung einer elektrischen Maschine nach einem der vorhergehenden Ansprüche, wobei in mindestens einem Wicklungsstrang (70) zunächst wenigstens zwei, über wenigstens einen Drahtabschnitt verbundene Wicklungsteilstränge (70.1, 70.2) gewickelt werden, welche anschließend in Umfangsrichtung gegeneinander verdreht und durch den wenigstens einen, den unregelmäßigen Wicklungsabschnitt (91) bildenden Drahtabschnitt (91) miteinander verbunden werden, **dadurch gekennzeichnet, dass** der Verdrehwinkel der Wicklungsteilstränge (70.1, 70.2) gegeneinander wenigstens dem zweifachen Wert des durch die Polzahl (p) geteilten Gesamtumfangswinkels (360°) entspricht.

17. Verfahren nach Anspruch 16, **dadurch gekennzeichnet, dass** die Wicklungsteilstränge (70.1, 70.2) im Wesentlichen kreisförmig oder als Vieleck gewickelt, anschließend sternförmig verformt und danach gegeneinander verdreht werden.

18. Verfahren nach einem der Ansprüche 16 und 17, **dadurch gekennzeichnet, dass** die vorgeformten Wicklungsteilstränge (70.1, 70.2) nacheinander axial in die Nuten (15) eines kreisringförmigen Statorblechpaketes (17) eingezogen und dabei in den Nuten (15) und in den Wickelköpfen (45, 46) radial geschichtet werden.

## Claims

1. An electrical machine, in particular electrically excited claw-pole generator for motor vehicles, having a stator (16) whose winding (18) has a five-stranded configuration and is connected with its line connections (80-84) to a rectifier arrangement (69) or a pulse inverter arrangement, **characterised in that** the winding start (x) and the winding end (y) of at least one winding strand (70-74) are more than five grooves (15) apart and each groove (15) of this strand (70-74) has the same number of coil sides (92).

2. The electrical machine according to claim 1, **characterised in that** at least one winding strand (70-74) has at least two winding sub-strands (70.1, 70.2, etc.) connected by at least one irregular winding section (91).

3. The electrical machine according to claim 1 or 2, **characterised in that** at least one winding strand (70-74) has more than two winding sub-strands (70.1, 70.2 etc.), which are connected by at least two irregular winding sections (91).

4. The electrical machine according to any one of the preceding claims, **characterised in that** only one of the five winding strands (70-74) has an irregular winding section (91).

5. The electrical machine according to any one of the preceding claims, **characterised in that** the irregular winding sections (91) are arranged on the same winding head (46) as the terminals (80-84) of the winding strands (70-74) and are fixed through the terminals on the winding head (46).

6. The electrical machine according to claim 5, **characterized in that** the irregular winding sections (91) are at least partially fixed by twisted end portions of the terminals (80-84) of the winding strands (70-74) on the winding head (46).

7. The electrical machine according to any one of the preceding claims, **characterised in that** the irregular winding sections (91) extend between two winding sub-strands (70.1, 70.2, etc.) over a number of grooves (15) which correspond to at least twice, preferably four times the number (m) of phases.

8. The electrical machine according to any one of the preceding claims, **characterised in that** there is the same number of coil sides (92) in each groove (15) of the stator (16).

9. The electrical machine according to any one of the preceding claims, **characterised in that** all winding sub-strands (70.1, 70.2 etc.) of a winding strand (70-74) are wound from a continuous wire.

10. The electrical machine according to any one of the preceding claims, **characterised in that** the winding strands (70-74) are formed as a distributed wave winding.

11. The electrical machine according to any one of the preceding claims, **characterised in that** the winding strands (70-74) are radially layered in the winding heads (45,46).

12. The electrical machine according to claim 11, **characterised in that** the one or more winding strands (70) are arranged with one or more irregular winding sections (91) radially between winding strands (71-74) without irregular winding sections (91).

13. The electrical machine according to any one of the preceding claims, **characterised in that** the connections (80-84) of the winding strands (70-74) to be interconnected emerge from directly adjacent grooves (15).

14. The electrical machine according to any one of the preceding claims, **characterised in that** at the stator circumference always four grooves (15) without strand connections lie between two adjacent grooves (15) with terminals (80-84) of the winding strands (70-74).

15. The electrical machine according to any one of the preceding claims, **characterised in that** the stator winding (16) is connected as a five-pointed star (pentagram, pentagon with five intersections).

16. The method for producing an electrical machine according to any one of the preceding claims, wherein at least two winding partial strands (70.1, 70.2) connected via at least one wire section are first wound in at least one winding strand (70), which are then rotated in the circumferential direction against each other and are interconnected by said at least one wire section (91) forming the irregular winding section (91), **characterised in that** the twist angle of the winding sub-strands (70.1, 70.2) against each other corresponds to at least twice the value of the total circumferential angle (360°) divided by the number of poles (p).

17. The method according to claim 16, **characterised in that** the winding sub-strands (70.1, 70.2) are wound substantially in a circle or as a polygon, then deformed in a star shape and then rotated against each other.

18. The method according to any one of claims 16 and 17, **characterised in that** the preformed winding sub-strands (70.1, 70.2) are successively axially retracted into the grooves (15) of an annular stator lamination (17) and in the grooves (15) and radially layered in the winding heads (45 , 46).

## Revendications

1. Machine électrique, en particulier un générateur à pôles à griffes excité électriquement pour des véhicules automobiles, comportant un stator (16) dont le bobinage (18) est formé de cinq torons et est relié avec ses bornes de toron (80 à 84) à un dispositif redresseur (69) ou à un dispositif inverseur à impulsion, **caractérisée en ce que** le début de bobinage (x) et la fin de bobinage (y) d'au moins un toron d'enroulement (70 à 74) sont espacés l'un de l'autre de plus de cinq rainures (15) et chaque rainure (15) de ce toron (70 à 74) comporte le même nombre de côtés de bobine (92) .

2. Machine électrique selon la revendication 1, **caractérisée en ce qu'**au moins un toron d'enroulement (70 à 74) comporte au moins deux sous-torons d'enroulement (70.1, 70.2, etc.) qui sont reliés par au moins une partie d'enroulement irrégulière (91).

3. Machine électrique selon la revendication 1 ou 2, **caractérisée en ce qu'**au moins un toron d'enroulement (70 à 74) comporte plus de deux sous-torons d'enroulement (70.1, 70.2, etc.) qui sont reliés par au moins deux parties d'enroulement irrégulières (91).

4. Machine électrique selon l'une des revendications précédentes, **caractérisée en ce que** sur les cinq torons d'enroulement (70 à 74), un seul comporte une partie d'enroulement irrégulière (91).

5. Machine électrique selon l'une des revendications précédentes, **caractérisée en ce que** les parties d'enroulement irrégulières (91) sont agencées sur la même tête de bobine (46) que les bornes (80 à 84) des torons d'enroulement (70 à 74) et sont fixées sur la tête de bobine (46) par les bornes.

6. Machine électrique selon la revendication 5, **caractérisée en ce que** les parties d'enroulement irrégulières (91) sont fixées sur la tête de bobine (46) au moins en partie par des parties d'extrémité torsadées des bornes (80 à 84) des torons d'enroulement (70 à 74).

7. Machine électrique selon l'une des revendications précédentes, **caractérisée en ce que** les parties d'enroulement irrégulières (91) entre deux sous-torons d'enroulement (70.1, 70.2, etc.) s'étendent sur un nombre de rainures (15) correspondant au moins au double, de préférence au quadruple, du nombre de phases (m).

8. Machine électrique selon l'une des revendications précédentes, **caractérisée en ce qu'**il y a le même nombre de côtés de bobine (92) dans chaque rainure (15) du stator (16).

9. Machine électrique selon l'une des revendications précédentes, **caractérisée en ce que** tous les sous-torons d'enroulement (70.1, 70.2, etc.) d'un toron d'enroulement (70 à 74) sont enroulés à partir d'un fil continu.

10. Machine électrique selon l'une des revendications présentes, **caractérisée en ce que** les torons d'enroulement (70 à 74) sont formés comme un enroulement ondulé réparti.

11. Machine électrique selon l'une des revendications précédentes, **caractérisée en ce que** les torons d'enroulement (70 à 74) sont disposés radialement en couches dans les têtes de bobine (45, 46).

12. Machine électrique selon la revendication 11, **caractérisée en ce que** la (les) toron (s) d'enroulement (70) est (sont) agencé(s) avec une ou plusieurs parties d'enroulement irrégulières (91) radialement entre des torons d'enroulement (71 à 74) sans partie d'enroulement irrégulière (91).

13. Machine électrique selon l'une des revendications précédentes, **caractérisée en ce que** les bornes (80 à 84) des torons d'enroulement (70 à 74) à interconnecter sortent par des rainures (15) directement adjacentes.

14. Machine électrique selon l'une des revendications précédentes, **caractérisée en ce que** sur la périphérie du stator, il y a respectivement quatre rainures (15) sans bornes de toron entre deux rainures (15) adjacentes avec des bornes (80 à 84) des torons d'enroulement (70 à 74).

15. Machine électrique selon l'une des revendications précédentes, **caractérisée en ce que** le bobinage de stator (16) est branché en étoile à cinq branches (pentagramme, pentagone à cinq croisements).

16. Procédé pour fabriquer une machine électrique selon l'une des revendications précédentes, dans lequel dans au moins un toron d'enroulement (70), au moins deux sous-torons d'enroulement (70.1, 70.2) reliés par au moins une partie de fil sont d'abord enroulés, lesquels sous-torons sont ensuite tournés l'un contre l'autre dans une direction circonférentielle et sont reliés l'un à l'autre par la au moins une partie de fil (91) formant la partie d'enroulement irrégulière (91), **caractérisé en ce que** l'angle de rotation mutuel des sous-torons d'enroulement (70.1, 70.2) correspond au moins au double de l'angle circonférentiel complet (360°) divisé par le nombre de pôles (p).

17. Procédé selon la revendication 16, **caractérisé en ce que** les sous-torons d'enroulement (70.1, 70.2) sont enroulés de manière sensiblement circulaire ou comme un polygone, puis sont formés en étoile et tournés l'un contre l'autre.

18. Procédé selon l'une des revendications 16 et 17, **caractérisé en ce que** les sous-torons d'enroulement préformés (70.1, 70.2) sont insérés l'un après l'autre axialement dans les rainures (15) d'un empilage de tôles de stator circulaire (17) et sont ainsi disposés radialement en couches dans les rainures (15) et dans les têtes de bobine (45, 46).
